(19) Europäisches Patentamt
European Patent Office
Office européen des brevets

(11) **EP 3 878 825 A1**

(12) **EUROPÄISCHE PATENTANMELDUNG**

(43) Veröffentlichungstag:
15.09.2021 Patentblatt 2021/37

(51) Int Cl.:
***C03C 10/00*** *(2006.01)*

(21) Anmeldenummer: 21165450.4

(22) Anmeldetag: **17.05.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.07.2010 DE 102010032113**

(62) Dokumentnummer(n) der früheren Anmeldung(en) nach Art. 76 EPÜ:
**11721745.5 / 2 595 931**

(71) Anmelder: **Schott AG**
**55122 Mainz (DE)**

(72) Erfinder:
• WEISS, Evelin
**55131 Mainz (DE)**
• SIEBERS, Dr. Friedrich
**55283 Nierstein (DE)**
• SCHOENBERGER, Klaus
**55127 Mainz (DE)**

Bemerkungen:
Diese Anmeldung ist am 29-03-2021 als Teilanmeldung zu der unter INID-Code 62 erwähnten Anmeldung eingereicht worden.

(54) **TRANSPARENTE EINGEFAERBTE LITHIUMALUMINIUMSILIKAT GLASKERAMIK MIT ANGEPASSTER THERMISCHER AUSDEHNUNG UND DEREN VERWENDUNG**

(57) Transparente eingefärbte Lithiumaluminiumsilikat (LAS)-Glaskeramik mit angepasster thermischer Ausdehnung bestehend aus einer Glaskeramik mit Hochquarz-Mischkristallen als vorherrschender Kristallphase, und einer thermischen Ausdehnung zwischen Raumtemperatur und 700°C von 1,0 bis 2,5 $\cdot 10^{-6}$/K, bevorzugt 1,3 bis 1,8 $\cdot 10^{-6}$/K aufweist.

EP 3 878 825 A1

**Beschreibung**

Die Erfindung hat eine transparente oder transparenteeingefärbte Lithiumaluminiumsilikat-Glaskeramik mit angepasster thermischer Ausdehnung bestehend aus einer Glaskeramik mit Hoch-quarz-Mischkristallen als vorherrschende Kristallphase sowie deren Verwendung zum Gegenstand. Es ist generell bekannt, dass sich Gläser aus dem System $Li_2O-Al_2O_3-SiO_2$ in Glaskeramiken mit Hochquarz-Mischkristallen und/oder Keatit-Mischkristallen als Hauptkristallphasen umwandeln lassen. Eine Schlüsseleigenschaft dieser Glaskeramiken mit Hochquarz-Mischkristallen als Hauptkristallphase ist die Herstellbarkeit von Werkstoffen, die in einem vorgegebenen Temperaturbereich über einen äußert niedrigen Wärmeausdehnungskoeffizienten verfügen. In der Regel wird das thermische Ausdehnungsverhalten so eingestellt, dass die Werkstoffe im Bereich ihrer Anwendungstemperaturen über thermische Nullausdehnung, meist $0 \pm 0,3 \cdot 10^{-6}$/K verfügen. So wird z. B. bei Anwendung als Substratmaterial, Wafer stages oder Spiegelträger für Teleskope die thermische Ausdehnung im Bereich der Raumtemperatur minimiert. Für Anwendungen als transparente Kaminsichtscheibe oder dunkel eingefärbte Kochfläche wird die thermische Nullausdehnung in einem Temperaturbereich zwischen Raumtemperatur und ca. 700 °C auf möglichst niedrige Werte eingestellt. Aufgrund der niedrigen thermischen Ausdehnung bei ihren Anwendungstemperaturen besitzen diese Glaskeramiken eine ausgezeichnete Temperaturunterschiedsfestigkeit und Temperaturwechselbeständigkeit, sowie Dimensionskonstanz. In transparenter Form, z. B. als Sichtfenster für Kamine, für Brandschutzverglasungen, als Kochfläche mit farbiger Unterseitenbeschichtung und für Display-Anwendungen wird in der Regel hohe Transparenz, bevorzugt eine Lichttransmission (brightness Y) im Sichtbaren größer als 80 % und ein definiert eingestellter, meist neutraler Farbton gewünscht.

Die Eigenfarbe transparenter Glaskeramikplatten hat verschiedene Ursachen. In den Gemengerohstoffen für die Schmelzen ist das färbende Element Fe als Verunreinigung enthalten. Auch die Verwendung der Läutermittel $Sb_2O_3$ und $CeO_2$ führt zu einer geringen Eigenfarbe. Die beschriebene bräunlich gelbe Eigenfärbung der transparenten Glaskeramiken beruht maßgeblich auf elektronischen Übergängen an Farbkomplexen, die im kurzwelligen Bereich des sichtbaren Lichtes absorbieren und an denen die für die Keimbildung wirksame Komponente $TiO_2$ beteiligt ist. Der häufigste absorbierende Farbkomplex ist die Ausbildung von benachbarten Fe- und Ti-Ionen, zwischen denen elektronische Charge-Transfer-Übergänge stattfinden. Sn/Ti-Komplexe bewirken ebenfalls eine Eigenfarbe. Die Fe/Ti-Farbkomplexe führen zu einer rotbraunen, die Sn/Ti-Farbkomplexe zu einer gelbbraunen Verfärbung. Die Ausbildung dieser Farbkomplexe findet bereits beim Abkühlen des Ausgangsglases und insbesondere beim späteren Keramisieren der Glaskeramiken statt. Durch Zusätze von färbenden Komponenten, wie $Nd_2O_3$ und CoO die im längerwelligen roten Spektralbereich absorbieren kann die Eigenfarbe zu Lasten einer erniedrigten Lichttransmission verringert werden. Diese optische Überfärbung ist in der EP1837312 A1 offenbart. Für die Anwendung als Kochfläche ist eine dunkle Einfärbung der an sich transparenten Glaskeramik mit Absenkung der Lichttransmission auf Werte unter 5 % gewünscht, die die Durchsicht auf die technischen Aufbauten unter der Kochfläche verhindert. Auf der anderen Seite sollen die strahlenden Heizkörper auch bei niedriger Leistung und farbige Anzeigen unterhalb der Kochfläche gut erkennbar sein. Dabei ist es vorteilhaft, wenn außer den üblichen roten LED-Anzeigen auch die Anzeige mit blauen, grünen, gelben, orangen, weißen Anzeigen oder gar die farbgetreue Anzeige von farbigen Bildschirmen möglich ist. Die großtechnischeHerstellung dieser Glaskeramiken erfolgt in mehreren Stufen. Zunächst wird das kristallisierbare Ausgangsglas aus einem Gemisch aus Scherben und pulverförmigen Gemengerohstoffen bei Temperaturen üblicherweise zwischen 1500 und 1650°C erschmolzen. Bei der Schmelze wird typischerweise Arsen- und/oder Antimonoxid als Läutermittel eingesetzt. Diese Läutermittel sind verträglich mit den geforderten Glaskeramikeigenschaften und führen zu guten Blasenqualitäten der Schmelze. Auch wenn diese Stoffe fest im Glasgerüst eingebunden sind, so sind sie doch unter Sicherheits- und Umweltschutzaspekten nachteilig. So müssen bei der Rohstoffgewinnung, der Rohstoff-aufbereitung und wegen des Verdampfens aus der Schmelze besondere Vorsichtsmaßnahmen ergriffen werden. Neuerdings wird insbesondere der Einsatz von $SnO_2$ als unbedenkliches Läutermittel beschrieben. Um gute Blasenqualitäten zu erreichen, werden bei konventionellen Schmelztemperaturen bis maximal 1700°C neben $SnO_2$ bevorzugt Halogenid-Verbindungen als zusätzliches Läutermittel eingesetzt. So wird in den japanischen Anmeldungen JP 11 100 229 A und JP 11 100 230 A der Einsatz von 0,1 - 2 Gew. % $SnO_2$ und 0 - 1 Gew. % Cl beschrieben. Der Zusatz von 0,05 - 1 Gew. % F (US 2007/0004578 A1) und 0,01 - 1 Gew. % Br (US 2008/0026927 A1) wird ebenfalls offenbart. Der Einsatz von $SnO_2$ in Verbindung mit Hochtemperaturläuterung oberhalb 1700°C zur Erreichung guter Blasenqualitäten wird in der DE 199 39 787 C2 beschrieben. Nach dem Einschmelzen und Läutern erfährt das Glas üblicherweise eine Heißformgebung durch Walzen oder neuerdings auch Floaten um Platten herzustellen. Für eine wirtschaftliche Herstellung ist eine niedrige Schmelztemperatur und eine niedrige Verarbeitungstemperatur VA gewünscht. Weiterhin darf das Glas bei der Formgebung keine Entglasung zeigen. Das heißt, bei der Formgebung dürfen sich keine störenden Kristalle bilden, die in den Ausgangsgläsern und den daraus hergestellten Glaskeramiken die Festigkeit beeinträchtigen. Da die Formgebung in der Nähe der Verarbeitungstemperatur VA (Viskosität $10^4$ dPas) des Glases stattfindet, muss gewährleistet sein, dass die obere Entglasungstemperatur der Schmelze unter der Verarbeitungstemperatur liegt, um die Bildung störender Kristalle zu vermeiden. In einem anschließenden Temperaturprozess wird das Ausgangsglas durch gesteuerte Kristallisation in den glaskeramischen Artikel überführt. Diese Keramisierung erfolgt in einem zweistufigen Temperaturprozess, bei dem zunächst durch Keimbildung bei einer Temperatur zwischen 680 und 800°C Keime, üblicherweise aus $ZrO_2/TiO_2$-Misch-kristallen, erzeugt werden. Auch $SnO_2$ kann an der Keimbildung beteiligt sein. Bei anschließender Temperaturerhöhung wachsen die Hochquarz-Mischkristalle auf diesen Keimen auf. Hohe Kristallwachstumsgeschwindigkeiten wie sie für eine wirtschaftliche schnelle Keramisierung gewünscht sind, werden bei Temperaturen von 800 bis 950°C erreicht. Bei dieser maximalen Herstelltemperatur wird das Gefüge der Glaskeramik homogenisiert und die optischen, physikalischen und chemischen Eigenschaften eingestellt. Falls erwünscht, können die Hochquarz-Mischkristalle anschließend noch in Keatit-Mischkristalle umgewandelt werden. Die Umwandlung in Keatit-Mischkristalle erfolgt bei Temperaturerhöhung in einem Temperaturbereich von ca. 970 bis 1250°C. Mit der Umwandlung erhöht sich der thermische Ausdehnungskoeffizient der Glaskeramik. Für Glaskeramiken mit Keatit-Mischkristallen als Hauptkristallphase, so zum Beispiel in der Schrift EP 1 170 264 B1. Man hat hier große Anstrengungen unternommen, den Wärmeausdehnungskoeffizienten auf mit diesem Kristallsystem erreichbare möglichst niedrige Werte von ca. $1 \cdot 10^{-6}$/K abzusenken, um die Anwendung als Kochfläche mit Strahlungsbeheizung zu ermöglichen. Für diese Beheizungsart ist eine Temperaturunterschiedsfestigkeit von > 650°C erforderlich. Mit der Umwandlung ist auch ein Kristallwachstum auf mittlere Kristallitgrößen von 100 nm und darüber sowie eine damit einhergehende Lichtstreuung verbunden. Glaskeramiken mit Keatit-Mischkristallen als Hauptkristallphase sind daher nicht mehr transparent, sondern transluzent oder opak. Bei Anwendung als Kochfläche wirkt sich die Lichtstreuung negativ auf die Anzeigefähigkeit aus, da die Anzeigen unter der Glaskeramikplatte nicht mehr klar erkennbar sind und sich ein störender Lichthof bildet.

Die Temperaturunterschiedsfestigkeit bei der Glaskeramik ist durch folgenden Zusammenhang gegeben:

$$\Delta T = \frac{1}{f} \cdot \frac{\sigma_g \cdot (1 - \mu)}{\alpha \cdot E}$$

Dabei entspricht $\Delta T$ der Temperaturunterschiedsfestigkeit, feinem dimensionslosen Korrekturfaktor (aufgrund der Plattengeometrie und der Temperaturverteilung), $\mu$ ist die Poissonzahl, E der E-Modul, $\alpha$ der Wärmeausdehnungs-koeffizient und $\sigma_g$ ist die Festigkeit, für die der Wert eingesetzt werden muss, der sich im praktischen Gebrauch bedingt durch Oberflächenverletzungen einstellt.

Bisher wurden Glaskeramiken mit Hochquarz-Mischkristallen als Hauptkristallphase so entwickelt, dass sie in ihrem Anwendungsbereich über möglichst niedrige bzw. thermische Nullausdehnung verfügen. Gängige Spezifikationen sind ca. $0 \pm 0,15 \cdot 10^{-6}$/Kfür Kochflächen und ca. $0 \pm 0,3 \cdot 10^{-6}$/K für Kaminscheiben (siehe dazu die Tabellen 3.3 und 3.4 in dem Buch "Low Thermal Expansion Glass Ceramics", Second Edition, Editor Hans Bach, Dieter Krause, Springer-Verlag Berlin Heidelberg 2005, ISBN 3-540-24111-6). Dies ist darin begründet, dass sich damit eine hohe Temperaturunterschiedsfestigkeit der Glaskeramiken im Gebrauch erreichen lässt, da sich bei Temperaturwechsel keine thermisch bedingten Spannungen aufbauen und benachbarte Bereiche mit unterschiedlichen Temperaturen keine oder nur sehr geringe Spannungen aufbauen. Dies stellt insbesondere für Kochflächen mit Strahlungsbeheizung eine Notwendigkeit dar. Nun ist aber die niedrige thermische Ausdehnung auch mit technischen Nachteilen verbunden. Die niedrige thermische Ausdehnung stellt eine Besonderheit für Werkstoffe dar. Gefügte Verbindungen mit anderen Werkstoffen, wie z.B. Metalle, Keramiken, Gläser sind aufgrund der hohen Unterschiede in der thermischen Ausdehnung kaum möglich oder erfordern aufwändige Konstruktionen mit Übergangswerkstoffen. Auch die metallischen oder anorganischen Fügelote selbst besitzen eine zu hohe thermische Ausdehnung.

Die unterschiedlichen thermischen Ausdehnungskoeffizienten führen zu hohen Spannungen, die die Fügeverbindung meist beim Abkühlen zerstören oder solche hohen Spannungen induzieren, dass die Festigkeit beeinträchtigt wird.

Bei mechanisch von außen gepressten Verbindungen kommt es im Temperaturwechsel zu einem ständigen Arbeiten der Werkstoffe gegeneinander, was zu Lockerung und Spaltbildung, z. B. bei Glaskeramiken mit metallischem Rahmen führen kann.

Bei transparenten Glaskeramiken wie z. B. Kaminsichtscheiben oder bei transparenten eingefärbten Glaskeramiken wie z. B. Kochflächen ist die Dekorierung mit anorganischen Farben üblich. Solche Dekorfarben sind z. B. in der DE 197 21 737 C1 beschrieben. Je nach Zusammensetzung verfügen diese Dekorfarben, die aus einem anorganischen Glasfluss und färbenden Pigmenten bestehen über thermische Ausdehnungskoeffizienten zwischen Raumtemperatur und 300 °C von ca. 4 bis $10 \cdot 10^{-6}$/K. Eine Dekorierung ist aufgrund dieser unterschiedlichen thermischen Ausdehnungskoeffizienten nur mit Einschränkungen möglich. Insbesondere ist die Schichtdicke auf Werte von maximal etwa 3 - 5 $\mu$m begrenzt wenn übliche Mindestwerte für die Biegezugfestigkeit der dekorierten Glaskeramik oberhalb ca. 30 MPa erreicht werden sollen. Bei höheren Schichtdicken bildet sich aufgrund der entstehenden hohen Zugspannungen in der Dekorschicht ein festigkeitserniedrigendes Rissnetzwerk aus. Die Haftung der Dekorschichten verringert sich und es besteht die Gefahr von Abplatzungen, bei denen meist auch ein Teil des Glaskeramiksubstrats mit ausmuschelt.

Der große Unterschied in den thermischen Ausdehnungskoeffizienten führt dazu, dass dekorierte Glaskeramiken über eine erniedrigte Biegezugfestigkeit verfügen. Auch die Stossfestigkeit wird erniedrigt, wenn die von außen einwirkende mechanische Zugbelastung auf die dekorierte Seite der Glaskeramik wirkt. Undekorierte Glaskeramiken verfügen demgegenüber über Werte der Biegezugfestigkeit von etwa 130 MPa.

Höhere Werte der Biegezugfestigkeit lassen sich mit dekorierten Glaskeramiken erreichen, wenn diese als Hauptkristallphase Keatit-Mischkristalle und damit höhere thermische Ausdehnungskoeffizienten von ca. 1 bis 2 • 10$^{-6}$/K besitzen. Die DE 197 21 737 C1 zeigt in den Ausführungsbeispielen den Vergleich zwischen mit gleichen Dekorfarben beschichten Substraten, die in Glaskeramiken mit Hochquarz- bzw. Keatit-Mischkristallen als Hauptkristallphase umgewandelt wurden. Die Biegezugfestigkeiten der dekorierten Keatit-Glaskeramiken sind etwa um den Faktor 2 höher. Allerdings besitzen Glaskeramiken mit Keatit-Mischkristallen als Hauptkristallphase die beschriebenen Nachteile. Bei transparent eingefärbten Glaskeramiken, wie sie für Kochflächen eingesetzt werden ist die Anzeigefähigkeit für farbige Leuchtanzeigen unzureichend. Bei transparenten Glaskeramiken wie sie für Kaminscheiben verwendet werden sind Glaskeramiken mit Keatit-Mischkristallen als Hauptkristallphase wegen der starken Streuung an den vergleichsweise großen Kristalliten und demzufolge mangelnder Transparenz ungeeignet.

Für Glaskeramiken mit Hochquarz-Mischkristallen als Hauptkristallphase und niedriger thermischer Ausdehnung sind die einsetzbaren Dicken der Dekorschicht aus Festigkeitsgründen begrenzt. Die begrenzten Schichtdicken beschränken nun aber die farbliche Deckkraft und damit die Gestaltungsfähigkeit beim Design.

Bei transparenten Glaskeramiken ist es kaum möglich, blickdichte Dekorbeschichtungen zu erzeugen. Die Dekorierung wirkt aufgrund mangelnder Deckkraft in der Regel durchsichtig.

Kochflächen aus eingefärbten Glaskeramiken sind in Aufsicht schwarz. Die begrenzte Schichtdicke der Dekorfarben führt insbesondere bei hellen Dekorfarben zu einer Veränderung des Farbtons, weil das schwarze Substrat nicht vollständig abgedeckt wird. Generell sind Farbintensität und der farbliche Bereich, die sich beim Design darstellen lassen, damit begrenzt.

Da Dekorfarben mit thermischer Nullausdehnung als kaum realisierbar erscheinen, ist es diesbezüglich wünschenswert den thermischen Ausdehnungskoeffizienten der Glaskeramik anzuheben.

Neue Entwicklungen im Bereich der Kaminsichtscheiben und auch bei den Beheizungssystemen von Kochflächen haben zu geringeren Forderungen an die Glaskeramikmaterialienbezüglich der Temperaturunterschiedsfestigkeit geführt.

Bei Kaminsichtscheiben, die in modernen Öfen eingebaut werden, sinkt die Forderung an die Temperaturunterschiedsfestigkeit. So wird zur Vermeidung einer Russbeaufschlagung der Scheibe im Verbrennungsraum vor der Innenseite der transparenten Glaskeramik ein Kaltluftvorhang erzeugt. Dadurch sinken die Temperaturen denen die Glaskeramikscheibe ausgesetzt ist.

Bei induktiv beheizten Kochflächen mit elektronischer Regelung sinkt die geforderte Temperaturunterschiedsfestigkeit auf Werte von < 600 °C und bei modernen Systemen zum Teil auf Werte von < 400 °C. Dies ist in dem Prinzip der Induktionsbeheizung begründet, die nicht die Glaskeramikplatte selbst, sondern den metallischen Topfboden direkt erwärmt. Die Glaskeramikkochfläche wird nur durch Rückerwärmung indirekt erhitzt. Als Kochflächen mit induktiver Beheizung sind sowohl schwarz eingefärbte Glaskeramiken als auch transparente mit blickdichter farbiger Unterseitenbeschichtung im Einsatz. Solche transparenten Glaskeramiken mit farbiger Unterseitenbeschichtung und gesondert beschichteten Bereichen sind zum Beispiel aus der Schrift US 6,660,980 B2 bekannt. Durch die Gestaltung der Unterseitenbeschichtung sind farbige Displayanzeigen möglich. Auch bei gasbeheizten Kochflächen gelten generell geringere Anforderungen an die Temperaturunterschiedsfestigkeit.

Bei neueren Anwendungen transparenter Glaskeramikscheiben als Displaygläser, in Verglasungen für Brandschutz sowie in Sicherheitsverglasungen in der Architektur oder für den ballistischen Schutz ist ein höherer thermischer Ausdehnungskoeffizient für die bessere Anpassung an andere Werkstoffe vorteilhaft. So werden die Glaskeramikscheiben beispielsweise in metallische Rahmen eingebaut oder mit Kunststoffen zu einem Laminat verbunden.

Durch die geringeren Anforderungen an die Temperaturunterschiedsfestigkeit ist es zulässig, den thermischen Ausdehnungskoeffizienten der Glaskeramik anzuheben. Für einige neuere Anwendungen von transparenten Glaskeramiken ist eine höhere thermische Ausdehnung vorteilhaft.

Es ist Aufgabe der Erfindung, die mit neuen Glaskeramik-Anwendungen verbundenen geringeren Anforderungen an die Temperaturunterschiedsfestigkeit auszunutzen, um die Vorteile hinsichtlich einer verbesserten Anpassung der thermischen Ausdehnung der Glaskeramik an andere Werkstoffe und an Dekorfarben zu erschließen.

Die Glaskeramiken sollen sich aufgrund ihrer Zusammensetzung für eine wirtschaftliche und umweltfreundliche Herstellung eignen. Für die wirtschaftliche Herstellung sollen die Ausgangsgläser gut schmelzbar und läuterbar sein, über eine hohe Entglasungsstabilität verfügen und in kurzen Zeiten keramisierbar sein. Bei Verwendung als Kaminscheibe oder Kochfläche soll die Glaskeramik allen Anforderungen genügen, wie z. B. chemische Beständigkeit, mechanische Festigkeit, Transmission, Temperaturbelastbarkeit und Langzeitstabilität hinsichtlich Änderungen ihrer Eigenschaften (wie z.B. thermische Ausdehnung, Transmission, Aufbau von Spannungen). Hinsichtlich der Transmission ist bei transparenten Glaskeramiken eine hohe Lichttransmission und geringe Eigenfarbe von Vorteil. Bei transparenten eingefärbten Glaskeramiken wie sie hauptsächlich für Kochflächen eingesetzt werden wird ein schwarzes Erscheinungsbild und eine gute Anzeigefähigkeit mit verschiedenfarbigen Anzeigen gewünscht. Diese Aufgaben werden durch eine Lithiumaluminiumsilikat-Glaskeramik gemäß Anspruch 1 und durch deren Verwendung gemäß Anspruch 11 gelöst. Die transparente oder transparente eingefärbte Lithiumaluminiumsilikat-Glaskeramik verfügt über eine angepasste thermische Ausdehnung zwischen Raumtemperatur und 700 °C von 1,0 bis 2,5 • $10^{-6}$ /K und bevorzugt von 1,3 bis 1,8 • $10^{-6}$ /K und besteht aus Hochquarz-Mischkristallen als vorherrschender Kristallphase. Die erfindungsgemäße Glaskeramik enthält als Hauptbestandteile die Komponenten:

MgO 1,4 - 3
$Al_2O_3$ 19 - 23
$SiO_2$ 60 - 69
$TiO_2$ 0,5 - 6,0
$ZrO_2$ 0 - < 2,0
$SnO_2$ 0 - 0,6.

Die Oxide $Li_2O$, MgO, $Al_2O_3$ und $SiO_2$ in den bevorzugten, angegebenen Grenzen sind Bestandteile der Hochquarz-Mischkristalle. Bei der Bildung der Mischkristalle substituieren die Li- Atome und die Mg-Atome zusammen mit dem Al- Atom die Si- Atome. Das Al- Atom wird im Kristallgerüst in der Position des Si- Atoms eingebaut und die Li- bzw. Mg- Atome in den Kanälen der Kristallstruktur dienen zur Ladungskompensation. Ein Mindestgehalt an $Li_2O$ von 2 Gew. % ist für eine gut kontrollierbare Kristallisation vorteilhaft. Höhere Gehalte ab 3 Gew. % und darüber erschweren die Einstellung der erfindungsgemäßen Werte für die thermische Ausdehnung, da $Li_2O$ diese erniedrigt. Für deren Einstellung ist ein MgO -Gehalt von 1,4 bis 3 Gew. % erforderlich. Da MgO zu einer Erhöhung der thermischen Ausdehnung des Hochquarz-Mischkristalls und damit der Glaskeramik führt, sind vergleichsweise höhere Gehalte als üblich erforderlich. Um höhere Viskositäten des Ausgangsglases und die unerwünschte Entglasung von Mullit bei der Formgebung zu vermeiden, ist der $Al_2O_3$ -Gehalt auf bevorzugt maximal 23 Gew. % begrenzt. Der $SiO_2$-Gehalt soll maximal 69 Gew. % betragen, weil diese Komponente die Viskosität des Glases stark erhöht. Für gutes Einschmelzen der Gläser und für niedrige Formgebungstemperaturen sind höhere Gehalte von $SiO_2$ unwirtschaftlich. Der Mindestgehalt an $SiO_2$ soll 60 Gew. % betragen, weil dies für die geforderten Eigenschaften, wie z.B. chemische Beständigkeit und Temperaturbelastbarkeit vorteilhaft ist.

$TiO_2$, $ZrO_2$ und $SnO_2$ sind als Keimbildner erforderlich und bilden bei der Keimbildung Mischkristalle aus den drei Komponenten. Auf diesen Keimbildnerkristallen wachsen die Hochquarz-Mischkristalle bei der Kristallisation dann auf. Der $ZrO_2$-Gehalt ist auf weniger als 2 Gew. % begrenzt, da höhere Gehalte das Einschmelzverhalten des Gemenges bei der Glasherstellung verschlechtern und die Entglasungsstabilität bei der Formgebung durch Bildung von $ZrO_2$-haltigen Kristallen beeinträchtigt werden kann. Die Komponente $TiO_2$ ist ein sehr wirksamer und für kurze Keimbildungs- zeiten

wichtiger Bestandteil. Der $TiO_2$-Gehalt soll mindestens 0,5 Gew. % und höchstens 6 Gew. % betragen. Der Gehalt soll 6 Gew. % nicht übersteigen, weil sonst die Entglasungsstabilität verschlechtert wird. Dies gilt auch besonders für die Komponente $SnO_2$, die auf Werte von höchstens 0,6 Gew. % begrenzt ist. Höhere Gehalte führen zur Kristallisation von Sn-haltigen Kristallphasen an den Kontaktmaterialien (z.B. Pt/Rh) bei der Formgebung und sind zu vermeiden.

Der thermische Ausdehnungskoeffizient soll mindestens 1,0 • $10^{-6}$/K betragen, um die Vorteile bei der Anpassung der thermischen Ausdehnungen an andere Werkstoffe und insbesondere Dekorfarben zu verbessern. Der thermische Ausdehnungskoeffizient beträgt höchstens $2,5-10^{-6}$/K weil sonst die damit verbundene Temperaturunterschiedsfestigkeit auf unzulässig niedrige Werte sinkt. Auch stehen für solche hohen thermischen Ausdehnungskoeffizienten bereits großtechnisch herstellbare Gläser wie z. B. Borosilikatgläser zur Verfügung.

Der thermische Ausdehnungskoeffizient beträgt bevorzugt 1,3 bis $1,8·10^6$/K. Mit diesen Werten werden auch hinsichtlich der Temperaturunterschiedsfestigkeit anspruchsvollere Anwendungen wie z.B. Induktionskochflächen mit schnellen Ankochzeiten (Booster Funktion) sowie Kaminsichtscheiben mit einfacherem Aufbau, bei denen die Glaskeramikscheiben höheren Temperaturen ausgesetzt sind, bedient.

Die Einstellung des thermischen Ausdehnungskoeffizienten hängt von zwei Forderungen ab. Zum einen wird man den Ausdehnungskoeffizienten in dem erfindungsgemäßen Bereich möglichst hoch einstellen, um die thermische Anpassung an andere Werkstoffe, insbesondere an Dekorfarben zu verbessern. Auf der anderen Seite ist die Höhe des thermischen Ausdehnungskoeffizienten durch die mit der angestrebten Anwendung verbundene Temperaturunterschiedsfestigkeit begrenzt. Die angestrebten Anwendungen insbesondere Kaminsichtscheiben und Kochflächen mit Gas- oder Induktionsbeheizung erfordern je nach technischer Ausführung in der Regel Werte der Temperaturunterschiedsfestigkeit zwischen 250 und 600 °C.

Mit dem im erfindungsgemäßen Bereich auf die jeweilige Anforderung einstellbaren Wert des thermischen Ausdehnungskoeffizienten wird eine deutliche verbesserte Anpassung an andere Werkstoffe und an Dekorfarben erreicht. Durch den erhöhten thermischen Ausdehnungskoeffizienten wird das Fügen mit anderen Werkstoffen wie z. B. Kunststoffen, Metallen, Keramiken und Gläsern gegenüber den Glaskeramiken mit thermischer Nullausdehnung erleichtert. Der Einsatz von metallischen und anorganischen Fügeloten führt zu geringeren Spannungen und damit besitzen die gefügten Verbindungen höhere Festigkeitswerte. Bei mechanisch gepressten Verbindungen z. B. bei Glaskeramiken mit metallischen Rahmen arbeiten die Werkstoffe bei Temperaturwechsel weniger gegeneinander d. h. es gibt weniger Verschiebung und damit Lockerungen und Spaltbildung im Rahmen.

Bei Beschichtungen der Glaskeramik mit anorganischen Dekorfarben ist der Unterschied in den thermischen Ausdehnungskoeffizienten verringert. Damit wird es möglich bei derzeit üblichen Schichtdicken von etwa 2 bis 5 μm höhere Festigkeiten der dekorierten Glaskeramikartikel zu erreichen. Die sich nach Einbrand der Dekorfarben beim Abkühlen aufbauenden Spannungen sind verringert. Das üblicherweise entstehende Rissnetzwerk wird dadurch vermindert. Das bedeutet, dass die beim Spannungsabbau entstehenden Risse in ihrer Tiefe mit der sie in die Glaskeramik hineinreichen verringert sind und die Abstände der Risse in den dekorierten Flächen vergrößert sind. Die üblichen Risstiefen können sonst etwa 30 μm betragen, wobei die Risse in das Glaskeramiksubstrat eindringen. Es ist sogar möglich, die Entstehung von Rissen generell zu vermeiden. Aufgrund der verbesserten thermischen Anpassungen ist auch die Haftung der Dekorschichten verbessert und dies sowohl nach dem Dekoreinbrand als auch im Gebrauch bei üblichen mechanischen Belastungen und wiederkehrendem Temperaturwechsel. Neben der Verbesserung der Festigkeit kann man die verbesserte thermische Anpassung der Dekorfarben zum Glaskeramiksubstrat auch ausnutzen, um über erhöhte Schichtdicken die farbliche Deckkraft zu erhöhen. Bei transparenten Glaskeramiken ist es möglich Dekorbeschichtungen mit verbesserter Blickdichtheit (geringerer Transmission) zu erzeugen. Bei Kochflächen aus eingefärbten Glaskeramiken mit schwarzem Erscheinungsbild ist es möglich über die höhere Schichtdicke wesentlich intensivere Farbtöne zu erreichen. Bei hellen Dekorfarben wird die visuelle Verfälschung des Farbtons durch das nicht vollständig abgedeckte schwarze Glaskeramiksubstrat vermieden. Der farbliche Bereich, der sich beim Design darstellen lässt ist damit zu helleren Bereichen und reineren Farbtönen erweitert. Gemessen in Remission drückt sich dies im CIELAB-Farbsystem in höheren L- Werten aus. Der angepasste Wert der thermischen Ausdehnung ermöglicht es daher die gestalterischen Möglichkeiten beim Design zu erweitern.

Die Glaskeramik besteht aus Hochquarz-Mischkristallen als vorherrschende Kristallphase. Andere Nebenkristallphasen sind z. B. die sich bei der Keimbildung ausbildenden Kristalle aus den Keimbildnern $TiO_2$, $ZrO_2$ und $SnO_2$ sowie Kristalle des Keatit-Mischkristalltyps. Der Anteil der Nebenkristallphasen soll bevorzugt weniger als 10 Gew. % betragen. Sonst kommt es durch den hohen Brechungsindex der Keimbildnerkristalle bzw. die größere Kristallitgröße der Keatit-Mischkristalle zu einer störenden Lichtstreuung der Glaskeramik. Bei Keatit-Mischkristallen beträgt die mittlere Kristallitgröße in der Regel mindestens 100 nm. Die damit einhergehende Lichtstreuung macht sich bei transparenten Glaskeramiken sehr störenden als weißer Schleier bemerkbar. Bei transparent eingefärbten Glaskeramiken, z.B. bei Kochflächen wirkt sich die Lichtstreuung negativ auf die Anzeigefähigkeit aus. leuchtende Anzeigen unter der Glaskeramik sind nicht mehr konturenscharf abgebildet und besitzen einen störenden Lichthof. Es ist daher vorteilhaft, wenn die mittlere Kristallitgröße der Glaskeramik mit Hochquarz-Mischkristallen als vorherrschende Kristallphase weniger als 150 nm und besonders bevorzugt weniger als 70 nm beträgt. Der Kristallphasenanteil der Hochquarz-Mischkristalle der erfindungsgemäßen Glaskeramik beträgt vorzugsweise 50 - 75 Gew. %. Der Kristallphasenanteil soll mindestens 50 Gew% betragen weil dies für höhere Biegezugfestigkeiten der Glaskeramik vorteilhaft ist. Vorzugsweise beträgt der Kristallphasenanteil weniger als 75 Gew%. Bei höheren

Werten wird es schwierig, die kristallisierbaren Gläser in kurzen Zeiten verformungsfrei zu keramisieren. Aufgrund der höheren Werte der Kristallisationswärme die beim Kristallisieren der Glaskeramiken ungleichmäßig im Volumen anfallen und der höhere Steifigkeit der Glaskeramik werden längere Zeiten benötigt, um verformungsfreie Glaskeramikartikel, wie zum Beispiel ebene Platten zu erhalten.

Die erfindungsgemäße Glaskeramik enthält bevorzugt als Hauptbestandteile der Zusammensetzung die Komponenten (in Gew. % auf Oxidbasis):

$Li_2O$ 2,0 - <3,0

Σ $Na_2O+K_2O$ 0 -2

MgO 1,4 - 3

Σ CaO+SrO+BaO 0 - 4

ZnO 0 - 3

$Al_2O_3$ 19 - 23

$SiO_2$ 60 - 69

$TiO_2$ 0,5 - 6,0

$ZrO_2$ 0 - < 2

$SnO_2$ 0 - 0,6

$\Sigma$ TiO2+ZrO2+SnO2 3 - 6

$P_2O_5$ 0 - 3

mit der Bedingung (in Gew. %):

MgO / $Li_2O$ > 0,5, sowie gegebenenfalls ein Läutermittel, ausgewählt aus der Gruppe $Sb_2O_3$, $As_2O_3$ in Gehalten von 0,1 bis 2 Gew. %. Bei der Herstellung von Glaskeramikartikeln sind als gute Blasenqualitäten solche mit Blasenzahlen von unter 5, bevorzugt unter 3 Blasen/kg im kristallisierbaren Ausgangsglas, bzw. in der Glaskeramik (bezogen auf Blasengrößen größer als 0,1 mm) gefordert. Um die Läuterung zu verbessern können neben den aufgeführten Hauptläutermitteln zusätzlich weitere Läuterhilfsmittel wie z.B. $CeO_2$, Sulfat-, Sulfid- und Halogenid-verbindungen eingesetzt werden. Deren Gehalte sind üblicherweise auf Mengen bis 1 Gew. % begrenzt.

Für die erfindungsgemäße Einstellung der thermischen Ausdehnung der Glaskeramik beträgt der MgO-Gehalt wenigstens 40%, bevorzugt wenigstens 50% des $Li_2O$-Gehaltes, d.h. es gilt die Beziehung MgO/$Li_2O \geq$ 0,4, bevorzugt $\geq$ 0,5. Die Mindestmenge der Keimbildner $TiO_2$, $ZrO_2$ und $SnO_2$ beträgt 3 Gew.%. Bei der Keramisierung bilden sie während der Keimbildung Kristallkeime in hoher Dichte, die für das Aufwachsen der Hochquarz-Mischkristalle bei der Kristallisation als Unterlage dienen. Die hohe Keimdichte führt zu einer hohen Kristalldichte und sorgt für eine mittlere Kristallitgröße, die unter der Größe von 150 nm bleibt, deren Überschreitung hinsichtlich einer störenden Lichtstreuung kritisch ist.

Außerdem sind die Keimbildnergehalte mit der Keimbildungsrate korreliert und damit für kürzere Keramisierungszeiten von Bedeutung. Höhere Gehalte als in der Summe 6 Gew. % verschlechtern die Entglasungsstabilität. Für verbesserte Entglasungsstabilität ist der $SnO_2$ Gehalt auf 0,6 und bevorzugt 0,4 Gew. % begrenzt.

Als weitere Komponenten können ZnO und $P_2O_5$ in die Hochquarz-Mischkristalle eingebaut werden. Der ZnO-Gehalt ist wegen der Problematik der Bildung unerwünschter Kristallphasen, wie Zink-Spinell (Gahnit) bei der Keramisierung auf Werte von höchstens 3 Gew. % begrenzt. Die Zugabe an $P_2O_5$ kann bis zu 3 Gew. % betragen und ist bevorzugt auf 1,5 Gew. % begrenzt. Die Zugabe von $P_2O_5$ ist günstig für die Entglasungsstabilität, höhere Gehalte wirken sich ungünstig auf die Säurebeständigkeit der Glaskeramik aus.

Die Zugabe der Alkalien $Na_2O$, $K_2O$ und der Erdalkalien CaO, SrO, BaO sowie von $B_2O_3$ verbessern die Schmelzbarkeit und das Entglasungsverhalten bei der Formgebung des Glases. Die Gehalte müssen jedoch begrenzt werden, weil diese Komponenten nicht in die Kristallphasen eingebaut werden, sondern im Wesentlichen in der Restglasphase der Glaskeramik verbleiben. Zu hohe Gehalte beeinträchtigen das Kristallisationsverhalten bei der Umwandlung des kristallisierbaren Ausgangsglases in die Glaskeramik, hier insbesondere zu Lasten schneller Keramisierungsgeschwindigkeiten. Außerdem wirken sich höhere Gehalte ungünstig auf die Zeit-/Temperaturbelastbarkeit der Glaskeramik aus. Die Summe der Alkalien $Na_2O$ + $K_2O$ beträgt maximal 2 Gew. % und bevorzugt maximal 1,5 Gew. %. Die Summe der Erdalkalien CaO + SrO + BaO soll maximal 4 Gew. % betragen. Die genannten Alkalien und Erdalkalien reichern sich außer in der Restglasphase zwischen den Kristallen auch an der Oberfläche der Glaskeramik an. Beim Keramisieren bildet sich eine ca. 200 bis 1500 nm dicke glasige Oberflächenschicht die nahezu frei ist von Kristallen und die an diesen Elementen angereichert und an Lithium abgereichert ist. Diese glasige Oberflächenschicht wirkt sich günstig auf die chemische Beständigkeit der Glaskeramik aus.

Der Wassergehalt der Ausgangsgläser zur Herstellung der erfindungsgemäßen Kochflächen liegt abhängig von der Wahl der Gemengerohstoffe und der Prozessbedingungen bei der Schmelze üblicherweise zwischen 0,015 und 0,06 mol/l. Dies entspricht $\beta$-OH-Werten von 0,16 bis 0,64 mm$^{-1}$ für die kristallisierbaren Ausgangsgläser.

Die erfindungsgemäßen Glaskeramiken besitzen bevorzugt eine Zusammensetzung ohne die Läutermittel Arsen- und/oder Antimonoxid und sind damit technisch frei von diesen unter Sicherheits- und Umweltschutzaspekten nachteiligen Komponenten. Als Verunreinigung liegen diese Komponenten üblicherweise in Gehalten von weniger als 0,05 Gew. % vor.

Die erfindungsgemäße transparente Lithiumaluminiumsilikat-Glaskeramik, bzw der daraus hergestellte Artikel, besitzt bevorzugt eine Zusammensetzung der Glaskeramik, die in Gew. % auf Oxidbasis im Wesentlichen besteht aus:

$Li_2O$ 2,0 - <3,0

$\Sigma$ $Na_2O$+$K_2O$ 0,1 - 1,5

MgO 1,4 - 2,6

Σ CaO+SrO+BaO 0 - 4

ZnO 0 - 3

$B_2O_3$ 0 - 2

$Al_2O_3$ 19 - 23

$SiO_2$ 60 - 69

$TiO_2$ 0,5 - 2,5

$ZrO_2$ 0 - < 2

$P_2O_5$ 0 - 3

$SnO_2$ 0 - 0,6

Σ TiO2+ZrO2+SnO2 3 - 6

$Nd_2O_3$ 0 - 0,4

$Fe_2O_3$ < 0,03

mit der Bedingung:
MgO / $Li_2O$ > 0,5, sowie gegebenenfalls ein Läutermittel, ausgewählt aus der Gruppe $Sb_2O_3$, $As_2O_3$ in Gehalten von 0,1 bis 2 Gew. %. Der Begriff "im Wesentlichen besteht aus" bedeutet, dass die aufgeführten Komponenten wenigstens 96% in der Regel 98% der Gesamtzusammensetzung betragen sollen. Eine Vielzahl von Elementen wie z. B. F, Cl, die Alkalien Rb, Cs oder Elemente wie Hf sind bei den großtechnisch verwendeten Gemengerohstoffen übliche Verunreinigungen. Andere Verbindungen wie z.B. solche der Elemente Ge, Seltene Erden, Bi können in geringen Anteilen zugesetzt werden. Mit diesen Zusammensetzungsbereichen werden günstige Eigenschaften hinsichtlich der Transmission, sowie der Schmelzbarkeit und der Entglasungsstabilität erreicht. Für eine verbesserte Schmelzbarkeit und Entglasungsstabilität soll der Gehalt der Alkalien $Na_2O$ + $K_2O$ bevorzugt mindestens 0,1 Gew. % betragen. Für verbesserte Entglasungsstabilität ist der $SnO_2$ Gehalt auf 0,6 und bevorzugt 0,4 Gew. % begrenzt. Bei Kaminsichtscheiben wird eine gute Durchsicht auf den Brennraum und die Flammen gewünscht. Bei Kochflächen mit farbiger Unterseitenbeschichtung soll die Farbe der Unterseitenbeschichtung nicht durch die Eigenfarbe oder einen Graustich der Glaskeramik verfälscht werden. Für die Anwendungen der transparenten Glaskeramik ist daher eine hohe Lichttransmission (brightness) Y von mindestens 80%, bevorzugt größer als 85%, gemessen bei 4 mm Dicke mit Normlicht C, 2° gefordert. Die Bezeichnungen Lichttransmission und Helligkeit (brightness) Y entsprechen dergleichen Messgröße, gemessen nach DIN 5033.

Eine bevorzugte Ausgestaltung der Erfindung besteht darin, neben der hohen Lichttransmission auch eine geringe Eigenfarbe bereitzustellen. Die transparente Glaskeramik verfügt dann bei einer Dicke von 4mm über einen Yellowness Index (gemessen nach der Norm ASTM 1925/70 (77, 85)) von weniger als 12.

Diese Kombination von hoher Lichttransmission und geringer Eigenfarbe ist möglich mit den aufeinander abgestimmten erfindungsgemäß niedrigen $Fe_2O_3$-Gehalten < 0,03 Gew. %, mit den definierten Gehalten an Keimbildnern $TiO_2$, $SnO_2$ und $ZrO_2$ und durch das MgO / $Li_2O$ Verhältnis. Die Eigenfarbe geht maßgebliche auf die beschriebenen Farbkomplexe zurück, an denen die für die Keimbildung notwendige Komponente, das Ti-Ion beteiligt ist. Um die Eigenfarbe zu verringern sind die Gehalte von $Fe_2O_3$ auf weniger als 0,03 Gew. % und von $TiO_2$ auf maximal 2,5 Gew. % begrenzt. Das Verhältnis der Oxide MgO/$Li_2O$ beträgt mindestens 0,5. Es hat sich gezeigt, dass trotz der hohen MgO-Gehalte bei den niedrigen $Li_2$O-Gehalten die Eigenfarbe der transparenten Glaskeramik nicht wie üblich durch die hohen MgO-Gehalte beeinträchtig wird. Dieser negative Einfluss der höheren MgO-Gehalte wird zum Beispiel in der Patentschrift US 4,438,210 beschrieben. Die Ursache für diese überraschende Beobachtung wird darin gesehen, dass wegen der niedrigen $Li_2O$-Gehalte größere Mengen des Mg in den Hochquarz eingebaut werden und dort das Li substituieren. Es wird angenommen, dass die Komponenten MgO nur dann schädlich für die Eigenfarbe transparenter Glaskeramiken ist, wenn sie in der Restglasphase verbleibt.

Durch die optionale Zugabe des Überfärbungsmittel $Nd_2O_3$ in Gehalten bis zu 0,4 Gew. % kann die Eigenfarbe verringert werden, was allerdings die Lichttransmission erniedrigt. Weitere färbende Komponenten wie z.B. CoO können in Gehalten bis zu etwa 100 ppm zur Einstellung des Farbortes zugesetzt werden. In der Form als transparente eingefärbte Lithiumaluminiumsilikat-Glaskeramik, bzw. als daraus hergestellter Artikel, besitzt diese eine Lichttransmission kleiner als 5 % und eine Zusammensetzung der Glaskeramik, die in Gew. % auf Oxidbasis im Wesentlichen besteht aus:

$Li_2O$ 2,0 - <3,0

$\Sigma$ $Na_2O+K_2O$ 0,1 - 1,5

MgO 1,4 - 2,6

$\Sigma$ CaO+SrO+BaO 0 - 4

ZnO 0 - 3

$B_2O_3$ 0 - 2

$Al_2O_3$ 19 - 23

$SiO_2$ 60 - 69

$TiO_2$ 2 - 6

$ZrO_2$ 0 - < 2

$P_2O_5$ 0 - 3

$SnO_2$ 0 - 0,6

$\Sigma$ TiO2+ZrO2+SnO2 3 - 6

$V_2O_5$ 0,01 - 0,06,

mit der Bedingung:
MgO / $Li_2O$ > 0,5, sowie gegebenenfalls ein Läutermittel, ausgewählt aus der Gruppe $Sb_2O_3$, $As_2O_3$ in Gehalten von 0,1 bis 2 Gew. %. Zur Einstellung der auf die jeweilige Dicke des Glaskeramikartikels angepassten, erfindungsgemäßen Lichttransmission kleiner als 5 %, gemessen mit Normlicht C, 2°, enthält die Glaskeramik als Färbemittel 0,01 - 0,06 Gew. % $V_2O_5$. Die höheren $TiO_2$-Gehalte von mindestens 2 Gew. % unterstützen die Farbwirkung des $V_2O_5$. Als weiteres Farboxid enthält die Zusammensetzung $Fe_2O_3$ in Gehalten die über die übliche Verunreinigung in technischen Gemengerohstoffen von etwa 0,03 Gew. % hinausgehen und bis 0,3 Gew. % betragen können. Bei höheren Gehalten wird die Dekorierbarkeit mit hellen Farben beeinträchtigt, da sich diese verfärben.

Auch bei diesem bevorzugten erfindungsgemäßen Zusammensetzungsbereich sollte die Bedingung MgO/$Li_2O$ > 0,5 gelten. Dies stellt sicher, dass die gewünschten erfindungsgemäßen Werte für die thermische Ausdehnung erreicht werden. Als Hauptläutermittel wird mindestens eines aus der Gruppe $SnO_2$, $Sb_2O_3$ oder $As_2O_3$ ausgewählt, in Gehalten von 0,1 bis 2 Gew. %. Bevorzugt wird für eine umweltfreundliche Läuterung weniger als 0,6 Gew. % $SnO_2$ eingesetzt und die Zusammensetzung ist technisch frei von $Sb_2O_3$ oder $As_2O_3$. Für verbesserte Entglasungsstabilität ist der $SnO_2$ Gehalt bevorzugt auf 0,4 Gew. % begrenzt. Für eine wirtschaftliche Herstellung soll das kristallisierbare Ausgangsglas gut schmelzbar sein und über eine hohe Entglasungsstabilität verfügen. Hier soll die Verarbeitungstemperatur kleiner als 1320 °C und bevorzugt kleiner als 1310 °C sein. Die obere Entglasungsgrenze soll mindestens 15°C und bevorzugt mindestens 30 °C unter der Verarbeitungstemperatur liegen. Hinsichtlich der Entglasung kritische Kristallphasen sind Mullit (Aluminiumsilikat), Baddeleyt ($ZrO_2$) sowie $SnO_2$-enthaltene Kristallphasen. Hinsichtlich der Entglasungsstabilität sind demnach höhere Gehalte an $Li_2O$, $Al_2O_3$, $SiO_2$, $ZrO_2$ und $SnO_2$ nachteilig. Um die Viskosität der Glasschmelze abzusenken hat es sich als notwendig erwiesen, den Gehalt an $SiO_2$, $Al_2O_3$, $ZrO_2$ zu verringern, während die Gehalte an Alkalien $Na_2O$ + $K_2O$ und Erdalkalien CaO + SrO + BaO bei höheren Werten gewählt werden. Bevorzugt besitzt die transparente eingefärbte Lithiumaluminiumsilikat-Glaskeramik, eine Lichttransmission von kleiner als 5 % und eine Zusammensetzung in Gew. % auf Oxidbasis von:

Li$_2$O 2,0 - <3,0

Na$_2$O 0,1 -1

K$_{2O}$ 0,1 -1

Σ Na$_2$O+K$_2$O 0,2 - 1,5

MgO 1,5 - 2,6

CaO 0,1 - 1

SrO 0 - 1

BaO 0 - 3

Σ CaO+SrO+BaO 0,2 - 4

ZnO 0 - 2,5

B$_2$O$_3$ 0 - 1

Al$_2$O$_3$ 19 - 23

SiO$_2$ 62 - 67

TiO$_2$ 2,5 - 6

ZrO$_2$ 0 - 1,6

P$_2$O$_5$ 0 - 1,5

SnO$_2$ 0,1 - 0,4

Σ TiO2+ZrO2+SnO2 4,2 - 6

V$_2$O$_5$ 0,01 - 0,05

Fe$_2$O$_3$ 0,05 - 0,3,

mit den Bedingungen:

Fe$_2$O$_3$ / V$_2$O$_5$ > 2

MgO / Li$_2$O > 0,5, ohne die Läutermittel Arsen- und Antimonoxid. Die Bedingung MgO/Li$_2$O > 0,5 stellt sicher, dass die gewünschten erfindungsgemäßen Werte für die thermische Ausdehnung erreicht werden. Für die Einstellung der Lichttransmission von weniger als 5% gemessen mit Normlicht C, 2°, angepasst auf die Dicke der Glaskeramik, bzw. des daraus hergestellten Artikels wird eine Kombination der Farboxide V$_2$O$_5$ und Fe$_2$O$_3$ verwendet. Die Menge des Fe$_2$O$_3$ soll mindestens doppelt so groß sein wie die des V$_2$O$_5$. Die Komponente Fe$_2$O$_3$ ist als Rohstoff kostengünstiger und umweltfreundlicher. Außerdem unterstützt Fe$_2$O$_3$ die Läuterung der Glasschmelze. Höhere Mengen als 0,3 Gew. % sind ungünstig für die Dekorierbarkeit mit hellen Farben, da sich diese verfärben. Bevorzugt wird für eine umweltfreundliche Läuterung 0,1 bis 0,4 Gew. % SnO$_2$ eingesetzt und die Zusammensetzung ist technisch frei von Sb$_2$O$_3$ oder As$_2$O$_3$. Die bevorzugte Geometrie für die transparente oder transparent eingefärbte Glaskeramik, bzw. die daraus hergestellten Artikel, ist plattenförmig mit Dicken von 2,5 bis 14 mm, weil sich für diese Form wichtige Anwendungen wie z. B. als Kaminsichtscheibe, Brandschutzverglasung, Displayscheibe, Kochfläche, sowie als Sicherheitsverglasung mit mechanischer oder ballistischer Schutzwirkung erschließen. Bei geringeren Dicken wird die Festigkeit beeinträchtigt, höhere Dicken sind aufgrund des höheren Materialbedarfs weniger wirtschaftlich. Bis auf die Anwendung als Sicherheitsglas, bei der es auf hohe Festigkeiten ankommt, wird die Dicke daher in der Regel unter 6 mm gewählt. Geeignete Formgebungsverfahren für die benötigte plattenförmige Geometrie sind Walzen und Floaten. Die Glaskeramikplatte kann dabei nicht nur eben ausgeformt sein, sondern auch dreidimensional verformte, wie z. B. abgekantete, gewinkelte oder gewölbte Platten können verwendet werden. Die Platten können rechtwinklig oder in anderen Formen vorliegen sowie neben ebenen Bereichen dreidimensional verformte Bereiche wie z.B. Woks oder eingewalzte Stege enthalten. Die geometrischen Verformungen der Platten werden bei der Heißformgebung, wie z. B. durch strukturierte Formgebungswalzen oder durch nachgelagerte Heißformgebung an den Ausgangsgläsern wie z. B. durch Brenner oder durch Schwerkraftsenken beim Keramisieren mit unterstützenden keramischen Formen vorgenommen. Die transparente oder transparent eingefärbte Glaskeramikplatte ist bevorzugt ganz oder teilflächig mit einer anorganischen Dekorierung beschichtet. Bevorzugt wird eine anorganische Dekorfarbe mit einer vergleichsweise niedrigen thermischen Ausdehnung verwendet. Die Dekorfarbe wird so gewählt, dass die Differenz der thermischen Ausdehnung zur Glaskeramikplatte, gemessen zwischen Raumtemperatur und 300 °C, weniger als $4 \cdot 10^{-6}$/K beträgt. Dies wird durch die erfindungsgemäß höhere Ausdehnung der Glaskeramik erleichtert und führt zu niedrigeren Spannungen zwischen Dekorschicht und Substrat. Für die umweltfreundliche Dekorierung mit anorganischen Farben wird bevorzugt eine Zusammensetzung gewählt, die technisch frei ist von Blei, Cadmium, Quecksilber, sechswertigem Chrom und deren Verbindungen. Beispiele für Dekorierungen sind der umlaufende Rahmen bei Kaminscheiben aus transparenten Glaskeramikplatten. Bei Kochflächen gibt es vielfältige Dekorierungen aus Gründen des Designs oder technischer Art, z. B. für Kochzonen-Markierungen. Üblicherweise wird die Schichtdicke der Dekorierung nach Einbrand auf 2 - 5 $\mu$m begrenzt, um die Mindestfestigkeiten für die meisten Anforderungen von größer als 30 MPa zu erreichen. Mit der erfindungsgemäßen Glaskeramik lassen sich bei den üblichen Schichtdicken der Dekorierung von mindestens 3 $\mu$m höhere Biegezugfestigkeiten als üblich von größer als 50 MPa und sogar größer als 60 MPa erzielen. Durch die erfindungsgemäß höhere thermische Ausdehnung der Glaskeramiken mit Hochquarz-Mischkristallen als Hauptkristallphase sind die einsetzbaren Dicken der Dekorschicht erhöht. Dies gilt insbesondere wenn die bisher üblichen Spezifikationen für die Biegezugfestigkeit beibehalten werden. Die Dicke der Dekorierung ist größer als 5 $\mu$m, bevorzugt größer als 6 $\mu$m, wobei die Mindestfestigkeit von 35 MPa erreicht wird. Dies ermöglicht Dekorschichten mit erhöhter farblicher Deckkraft und erweitert insgesamt die gestalterischen Möglichkeiten beim Design. Kochflächen aus transparent eingefärbter Glaskeramik mit schwarzem Erscheinungsbild in Aufsicht lassen sich aufgrund der höheren Schichtdicke des Dekors mit intensiveren Farbtönen dekorieren. Die Dekorfarben sind farbtreuer und werden weniger durch das durchscheinende schwarze Substrat verfälscht. Generell ist der farbliche Bereich, der sich beim Design darstellen lässt damit erweitert.

Bei transparenten Glaskeramiken ist es durch die höhere Schichtdicke möglich, Dekorbeschichtungen mit verbesserter Blickdichtheit zu erzeugen.

Die transparente oder transparent eingefärbte Lithiumaluminiumsilikat-Glaskeramikplatte ist bevorzugt als Kochfläche ausgebildet, weil hier die Vorteile der angepassten thermischen Ausdehnung bei der Dekorierung, wie beschrieben, besonders zum Tragen kommen. Wenn die Kochfläche aus einer transparenten eingefärbten Lithiumaluminiumsilikat-Glaskeramikplatte besteht, soll sie über eine Lichttransmission von 0,5 bis 2,5 % verfügen. Um die störende Durchsicht auf die technischen Bauelemente unter der Glaskeramik-Kochfläche zu verhindern, ist die Lichttransmission auf Werte kleiner als 2,5 % begrenzt. Mit dieser Begrenzung wird auch das gewünschte schwarze Erscheinungsbild in Aufsicht gewährleistet. Andererseits ist für die Anzeigefähigkeit eine Lichttransmission von mindestens 0,5 % erforderlich, da die leuchtenden Anzeigen meist aus Leuchtdioden unterhalb der Kochplatte eingebaut werden. Diese Werte sind unabhängig von der Dicke der Glaskeramikplatte, die üblicherweise 2,5 bis 6 mm beträgt. Bei geringeren Dicken wird die Festigkeit beeinträchtigt, höhere Dicken sind aufgrund des höheren Materialbedarfs weniger wirtschaftlich.

Um die Anzeige mit den üblichen roten und anderen Farbanzeigen zu ermöglichen soll die Transmission im Bereich des sichtbaren Lichtes für den gesamten Wellenlängenbereich ab 450 nm größer als 0,1 % sein. Dieser Transmissionswert von 0,1 % wird bei den handelsüblichen Glaskeramik- Kochflächen für Wellenlängen unterhalb 550 nm unterschritten. Die üblichen roten Leuchtdioden strahlen bei Wellenlängen um 630 nm. Durch die starke Absorption im Bereich des sichtbaren Lichtes unterhalb 550 nm, die kleiner ist als 0,1%, geht jedoch die Anzeigefähigkeit für andersfarbige Anzeigen verloren. Dies gilt speziell für die Anzeige mit handelsüblichen blauen und grünen Leuchtdioden. Wenn die Kochfläche über eine Formgebung mit Walzen hergestellt wird, ist die Unterseite meist mit Noppen versehen um sie vor festigkeitserniedrigenden Verletzungen bei der Herstellung zu schützen. Oft wird der Bereich der farbigen Anzeigen mit transparentem organischen Polymer geglättet um eine optische Verzerrung durch die Noppen zu vermeiden. Bei Kochflächen mit glatter Unterseite, ohne Noppen sind farbigen Anzeigen unverzerrt und heller wahrnehmbar. Bevorzugt ist die Transmission der Kochfläche auf Werte von: > 0,15 % bei 450 nm, > 0,15 % bei 500 nm, > 0,25 % bei 550 nm, 2 - 12 % bei 630nm und eine Lichttransmission im Sichtbaren von 0,7 - 2,5 % eingestellt. Bei diesen Werten ist die farbliche Anzeigefähigkeit weiter verbessert und die unterschiedlichen Forderungen an den Transmissionsverlauf werden weiter optimiert. Eine besonders gute Abdeckung der technischen Einbauten unterhalb der Kochflächen-Glaskeramik und ein besonders ästhetisches schwarzes Aussehen in Auflicht wird erreicht, wenn die Lichttransmission weniger als 1,7 % beträgt. Transmissionswerte der Kochfläche bei 630 nm von 2 bis 12 % entsprechen den Toleranzwerten handelsüblicher Kochflächen. Es ist vorteilhaft diese gebräuchlichen Werte einzustellen, damit das Erscheinungsbild der gebräuchlichen roten LED-Anzeigen auch bei der erfindungsgemäßen Kochfläche unverändert ist. Neben dem Farboxid $V_2O_5$ in Gehalten von 0,01 bis 0,06 Gew. % können auch weitere färbende Komponenten wie z.B. Chrom-, Mangan-, Kobalt-, Nickel-, Kupfer-, Selen-, Selten Erd-, Molybdän- oder Sulfidverbindungen eingesetzt werden, um die Färbung zu unterstützten. So eignet sich beispielsweise der Zusatz von CoO und NiO, um speziell die Anzeige mit blauen LED zu optimieren. Der Gehalt der färbenden Zusätze ist auf Mengen von maximal etwa 2 Gew. %, bevorzugt weniger als 1 Gew. % begrenzt, weil diese Verbindungen in der Regel die Transmission im Sichtbaren und im infraroten absenken. Außerdem können diese größtenteils polyvalenten Verbindungen die Einfärbung des $V_2O_5$ über Redox-Reaktionen stören und die Einstellung der erfindungsgemäßen Transmissionswerte erschweren.

Durch Zusatz von Reduktionsmitteln in pulvriger und/oder flüssiger Form zum Ausgangsgemenge kann die Färbewirkung des $V_2O_5$ verstärkt werden. Dafür eignen sich Metalle, Kohlenstoff und/oder aufoxidierbare Kohlenstoff- bzw. Metallverbindungen wie z.B. Al- oder Si-Pulver, Zucker, Holzkohle, SiC, TiC, MgS, ZnS. Auch gasförmige Reduktionsmittel wie z.B. Formiergas sind geeignet. Bevorzugt werden dann weniger als 0,03 Gew. % $V_2O_5$ benötigt. Da Vanadiumoxid ein kostspieliger Rohstoff ist, ist es wirtschaftlich vorteilhaft, den Gehalt zu minimieren.

Vorzugsweise sind unter der erfindungsgemäßen Kochfläche mit verbesserter farbiger Anzeigefähigkeit anstelle oder in Ergänzung zu den üblichen roten Anzeigen eine oder mehrere andersfarbige Anzeigen wie blaue, grüne, gelbe, orange oder weiße angeordnet. Aufgrund des Transmissionsverlaufs sind blaue oder weiße Anzeigen besonders bevorzugt. Die farbigen Anzeigen bestehen aus Licht emittierenden elektronische Bauteilen, meist aus Leuchtdioden. Es sind alle Formen von Anzeigen, punktuelle wie flächige möglich. Aufgrund des gleichmäßigen spektralen Verlaufs der Transmission im Sichtbaren können erstmalig auch farbige Displays oder Bildschirme dargestellt werden.

Die Beheizung der Kochfläche erfolgt bevorzugt mit Gasbrennern oder induktiv. Die mit der erfindungsgemäßen thermischen Ausdehnung zusammenhängende Temperaturunterschiedsfestigkeit der Kochfläche beträgt dabei weniger als 600 °C. Dies ist für die genannten Beheizungsarten ausreichend und die Vorteile aufgrund der angepassten thermischen Ausdehnung bleiben gewahrt.

Die vorliegende Erfindung wird mit Hilfe der folgenden Beispiele weiter verdeutlicht. Für einige Ausführungsbeispiele sind in Tabelle 1 Zusammensetzungen und Eigenschaften der kristallisierbaren Ausgangsgläser für transparente Glaskeramiken aufgeführt. Dabei handelt es sich bei den Gläsern 1 bis 3 um erfindungsgemäße Gläser und bei dem Glas 4 um ein Vergleichsglas außerhalb der vorliegenden Erfindung. Tabelle 2 zeigt Zusammensetzungen und Eigenschaften kristallisierbarer Ausgangsgläser für transparente eingefärbte Glaskeramiken. Dabei handelt es sich bei den Gläsern 5 bis 11 um erfindungsgemäße Gläser und bei dem Glas 12 um ein Vergleichsglas außerhalb der vorliegenden Erfindung. Aufgrund von typischen Verunreinigungen in den verwendeten großtechnischen Gemengerohstoffen addieren sich die Zusammensetzungen nicht genau zu 100 Gew. %. Typische Verunreinigungen, auch wenn nicht absichtlich in die Zusammensetzung eingeführt sind F, Cl, B, P, Rb, Cs, Hf oder Sr, die üblicherweise weniger als 0,05 Gew. % betragen. Sie werden oft über die Rohstoffe für die verwandten Komponenten eingeschleppt, so z.B. Rb und Cs über die Na-, bzw. K- Rohstoffe, oder Sr über den Ba-Rohstoff. In Tabelle 1 und 2 sind auch die Eigenschaften im glasigen Zustand, wie z.B.: Transformationstemperatur Tg, Verarbeitungstemperatur $V_A$, Entglasungstemperatur, sowie die Dichte aufgeführt. Zur Messung der Entglasungstemperatur werden die Gläser in Pt/Rh10-Tiegeln aufgeschmolzen. Anschließend werden die Tiegel für 5 Stunden bei verschieden Temperaturen im Bereich der Verarbeitungstemperatur gehalten. Die oberste Temperatur bei der die ersten Kristalle an der Kontaktfläche der Glasschmelze zur Tiegelwand auftreten bestimmt die Entglasungstemperatur.

Der Wassergehalt der Gläser beträgt 0,03-0,05 mol/l, entsprechend $\beta_{OH}$-Werten von 0,32 bis 0,53 mm$^{-1}$. Die Ausgangsgläser von Tabelle 1 und 2 wurden aus in der Glasindustrie üblichen Rohstoffen bei Temperaturen von ca. 1620°C, 4 Stunden eingeschmolzen. Nach dem Einschmelzen des Gemenges in Tiegeln aus gesintertem Kieselglas wurden die Schmelzen in Pt/Rh-Tiegel mit Innentiegel aus Kieselglas umgegossen und bei Temperaturen von 1550°C, 30 Minuten durch Rühren homogenisiert. Nach dieser Homogenisierung wurden die Gläser für 2 Stunden bei 1640°C geläutert. Anschließend wurden Stücke von ca. 140x140x30 mm$^3$ Größe gegossen und in einem Kühlofen, beginnend ab 660°C auf Raumtemperatur abgekühlt. Die Gussstücke wurden in die für die Untersuchungen und für die Keramisierung benötigten Größen unterteilt.

Die Tabellen 3 und 4 zeigen die Keramisierungsbedingungen und Eigenschaften der erhaltenen Glaskeramiken. Dabei erfolgten die Keramisierungen mit den folgenden Temperaturprogrammen. Bis zu einer Temperatur von 680 °C wird mit der höchsten Aufheizgeschwindigkeit, die im Keramisierungsofen möglich ist, ca. 20 °C/min aufgeheizt. Der Temperaturbereich von 680 bis 800 °C ist für die Keimbildung wichtig. Die Temperaturerhöhung wird in diesem Bereich so an die jeweilige Zusammensetzung angepasst, dass eine Lichtstreuung durch zu große Kristallite vermieden wird. Oberhalb von 800 °C erfolgt die Kristallisation der gewünschten Hochquarz-Mischkristallphase. Bei den Keramisierungsprogrammen 1 und 2 wird im Bereich der Keimbildung bei der Temperatur $T_{KB}$ eine Haltezeit $t_{KB}$ eingeführt. Ebenso wird die maximale Temperatur $T_{max}$ und Haltezeit $t_{max}$ individuell an die Zusammensetzung angepasst. Die Werte sind in den Tabellen angegeben.

Keramisierungsprogramm 1:

a) schnelles Aufheizen von Raumtemperatur auf 680 °C,
b) Temperaturerhöhung von 680 °C auf Keimbildungstemperatur $T_{KB}$ mit einer Heizrate von 5 °C/min, Haltezeit $t_{KB}$ von 30 min bei $T_{KB}$, weiteres Aufheizen mit 2,5 °C/min auf 800 °C,
c) Temperaturerhöhung von 800 °C auf Maximaltemperatur $T_{max}$ mit einer Heizrate von 2,5°C/min, Haltezeit $t_{max}$ von 15 min bei $T_{max}$,
d) Abkühlen auf 600 °C mit 4 °C/min, dann schnelle Abkühlung auf Raumtemperatur.

Keramisierungsprogramm 2:

a) schnelles Aufheizen von Raumtemperatur auf 680 °C,
b) Temperaturerhöhung von 680 °C auf Keimbildungstemperatur $T_{KB}$ mit einer Heizrate von 10 °C/min, Haltezeit $t_{KB}$ von 15 Minuten bei $T_{KB}$, weiteres Aufheizen mit 10 °C/min auf 800 °C,
c) Temperaturerhöhung von 800 °C auf Maximaltemperatur $T_{max}$ mit einer Heizraten von 10 °C/min, Haltezeit $t_{max}$ von 15 min bei $T_{max}$,
d) Abkühlen auf 800 °C mit 10 °C/min, dann schnelle Abkühlung auf Raumtemperatur.

Keramisierungsprogramm 3:

a) schnelles Aufheizen von Raumtemperatur auf 680 °C,
b) Temperaturerhöhung von 680 °C auf 730 °C mit einer Heizrate von 10°C/min, weiteres Aufheizen mit 5,2 °C/min auf 800 °C,
c) Temperaturerhöhung von 800 °C auf Maximaltemperatur $T_{max}$ von 920°C mit einer Heizrate von 6 °C/min, Haltezeit tmaxvon 6 min bei $T_{max}$,
d) Abkühlen auf 800 °C mit 4 °C/min, dann schnelle Abkühlung auf Raumtemperatur.

Keramisierungsprogramm 4:

a) schnelles Aufheizen von Raumtemperatur auf 680 °C
b) Temperaturerhöhung von 680 °C auf 800 °C mit einer Heizrate von 10°C/min
c) Temperaturerhöhung von 800 °C auf Maximaltemperatur $T_{max}$ mit einer Heizrate von 10°C/min, Haltezeit tmaxvon 15 Minuten bei Tmax
d) Abkühlen auf 800 °C mit 10 °C/min, dann schnelle Abkühlung auf Raumtemperatur.

Die Beispiele 4 und 13 in Tabelle 3 und 4 sind Vergleichsglaskeramiken au-βerhalb der Erfindung, die aus den aufgeführten kristallisierbaren Vergleichsgläsern 4 und 12 hergestellt wurden. Es sind die thermische Ausdehnung zwischen 20 und 500°C sowie zwischen 20 und 700°C und der mittels Röntgenbeugung gemessene Phasengehalt der Hauptkristallphase, bestehend aus Hochquarz-Mischkristallen, sowie die mittlere Kristallitgröße aufgezeigt.

Die Transmissionsmessungen wurden an polierten Platten der angegebenen Dicke mit Normlicht C, 2°, durchgeführt. Bei den Messungen an den transparenten bzw. transparenten eingefärbten Glaskeramiken (Tabelle 3 bzw. Tabelle 4) sind die Transmissionswerte bei ausgewählten Wellenlängen sowie die Helligkeit (brightness) Y bzw. Lichttransmission nach DIN 5033 angegeben. Die Eigenfarbe der transparenten Glaskeramiken in Tabelle 3 ist durch den Yellowness-Index nach Norm ASTM 1925/70 (77,85) charakterisiert. In weiteren Beispielen 14 bis 25 (Tabelle 5) wurden aus den kristallisierbaren Ausgangsgläsern Platten der Abmessung 50 x 50 x 3 mm präpariert. Die Flächen der Platten sind poliert.

Die Platten wurden mittels Siebdruck vollflächig in verschiedenen Schichtdicken dekoriert. Zu Vergleichszwecken blieben einige Platten undekoriert. Beim Siebdruck wurden in bekannter Weise Siebdruckpasten aus anorganischen Pulvern hergestellt. Dazu wurde zunächst ein Pulver in einer mittleren Korngröße von ca. 2 $\mu$m aus einem niedrig schmelzenden Glas mit einer Zusammensetzung entsprechend der DE 19721737 C1 hergestellt. Dieses wurde mit 20 % eines Weiß- oder Schwarzpigmentes vermischt und unter Zusatz von Siebdrucköl auf Fichtenölbasis zu einer Siebdruckpaste verarbeitet. Durch Variation der Siebdruckparameter wurden unterschiedliche Schichtdicken der Dekorierung eingestellt. Der Dekoreinbrand der bedruckten Prüfmuster wurde in einem Laborofen vorgenommen. Dabei wurde auch die Keramisierung der kristallisierbaren Ausgangsgläser in eine Glaskeramik mit Hochquarz-Mischkristallen als Hauptkristallphase durchgeführt. Die Tabelle 5 zeigt die verwendeten Einbrand- und Keramisierungsprogramme sowie die erhaltenen Eigenschaften als Funktion der Schichtdicke.

Die Schichtdicke wurde nach dem Einbrand mit einem Profilometer mit Diamantspitze Bezeichnung Alphastep der Firma Tencor bestimmt. Die Biegezugfestigkeit wurde nach der Doppelringmethode (DIN EN1288-5) gemessen.

Bei den Beispielen 15 bis 17 und den Vergleichsbeispielen 19 bis 21 wurden Gläser, die zu transparent schwarz eingefärbten Glaskeramiken kristallisierbar sind dekoriert. Die Beispiele 14 und 18 sind die undekorierten Referenzplatten. Die Platten sind in gleicher Weise präpariert. Die Vergleichsbeispiele 18 bis 21 sind aus einem weiteren kristallisierbaren Vergleichsglas Nr. 13 hergestellt. Dessen Zusammensetzung ist in der DE 10 2008 050 263 A1, Tabelle 1, Glas Nr.13 offenbart und führt zu einer Glaskeramik mit einer niedrigen thermischen Ausdehnung von -0,14 • 10$^{-6}$/K, außerhalb der vorliegenden Erfindung. Die anorganische Dekorierung enthält als Pigment ein handelsübliches $TiO_2$-Weißpigment. Die farbliche Deckkraft und Farbintensität der dekorierten Bereiche in Abhängigkeit von der Schichtdicke des Dekors und im Vergleich zu der undekorierten Referenz wurde über Remission und Messung der Lichttransmission in Durchlicht mit Normlicht C/2° bestimmt. Die Werte sind für das Lab- und das CIE-Farbsystem angegeben. Die vorteilhafte Wirkung höherer Schichtdicken ist aus den Werten erkennbar. Bei den Vergleichsbeispielen ist der stärkere Abfall der Biegezugfestigkeiten der dekorierten Platten erkennbar. Abhängig von der Schichtdicke wurde auch das entstehende Rissnetzwerk nach Häufigkeit (Abstand der Risse) und Tiefe der Risse mit einem Lichtmikroskop bewertet. Hierbei bedeutet 5 ein sehr dichtes tiefgehendes Rissnetzwerk, was auf hohe Spannungen zwischen Dekorschicht und Glaskeramiksubstrat schließen lässt und 0 bedeutet keine mikroskopisch erkennbaren Risse. Die dekorierten Vergleichsbeispiele weisen ein stärkeres Rissnetzwerk auf. Die Deckkraft der schwarz dekorierten transparenten Glaskeramiken, Beispiele 23 bis 25 wurde in Abhängigkeit von der Schichtdicke durch Messung der Lichttransmission in Durchlicht im dekorierten Bereich durchgeführt. Zu Vergleichzwecken wurden sowohl die Biegezugfestigkeit als auch die Lichttransmission an undekorierten Vergleichsmustern gleicher Dicke durchgeführt (Beispiel 22). Die vorteilhafte Wirkung höherer Schichtdicken des Dekors für die farbliche Deckkraft ist erkennbar.

Tabelle 1 Zusammensetzungen und Eigenschaften erfindungsgemäßer Ausgangsgläser und Vergleichsglas 4 für transparente Glaskeramiken

| Glas Nr. | | 1 | 2 | 3 | 4 |
|---|---|---|---|---|---|
| Zusammensetzungen in Gew. % Auf Oxidbasis | | | | | |
| $Al_2O_3$ | | 19,9 | 20,7 | 21,1 | 20,0 |
| $As_2O_3$ | | 0,75 | | | 0,81 |
| BaO | | 0,84 | 2,26 | | 0,82 |
| CaO | | - | 0,43 | 0,20 | - |
| $K_2O$ | | 0,19 | 0,25 | 0,10 | 0,18 |
| $Li_2O$ | | 2,79 | 2,87 | 2,66 | 3,71 |
| MgO | | 2,24 | 1,56 | 2,40 | 1,04 |
| $Na_2O$ | | 0,14 | 0,56 | 0,40 | 0,14 |
| $P_2O_5$ | | 0,03 | - | 0,03 | 0,03 |
| $SiO_2$ | | 67,3 | 65,1 | 67,2 | 67,5 |
| $SnO_2$ | | - | 0,23 | 0,19 | - |
| SrO | | | | | |
| $TiO_2$ | | 2,41 | 3,14 | 2,19 | 2,38 |
| ¡ZnO | | 1,53 | 1,38 | 1,64 | 1,53 |
| $ZrO_2$ | | 1,82 | 1,40 | 1,82 | 1,82 |
| $Nd_2O_3$; | | - | - | 0,016 | - |
| $Fe_2O_3$ | | 0,017 | 0,090 | 0,012 | 0,016 |
| | | | | | |
| Verhältnis $MgO/Li_2O$ | | 0,80 | 0,54 | 0,90 | 0,28 |
| Tg | °C | 694 | 684 | 704 | 683 |
| $V_A$ | °C | 1320 | 1309 | 1315 | 1325 |

(fortgesetzt)

| Glas Nr. | | 1 | 2 | 3 | 4 |
|---|---|---|---|---|---|
| *Zusammensetzungen in Gew. % Auf Oxidbasis* | | | | | |
| **Dichte** | g/cm³ | 2,464 | 2,490 | 2,457 | 2,449 |
| **Entglasungstemp.** | °C | 1285 | 1260 | 1340 | 1300 |

Tabelle 2: Zusammensetzungen und Eigenschaften erfindungsgemäßer Ausgangsgläser und Vergleichsglas12 für transparente eingefärbte Glaskeramiken

| *Glas Nr.* | | 5 | 6 | 7 | 8 | 9 | 10 | 11 | 12 |
|---|---|---|---|---|---|---|---|---|---|
| *Zusammensetz-ungen in Gew.% auf Oxidbasis* | | | | | | | | | |
| **$Al_2O_3$** | | 20,6 | 20,6 | 19,8 | 19,5 | 18,0 | 18,5 | 19,8 | 20,9 |
| **BaO** | | 2,20 | 2,20 | 2,02 | 2,28 | 1,42 | 1,45 | 1,94 | 2,28 |
| **$B_2O_3$** | | - | - | - | - | 0,94 | - | - | - |
| **CaO** | | 0,43 | 0,43 | 0,67 | 0,66 | 3,02 | 2,04 | 0,70 | 0,42 |
| **$K_2O$** | | 0,21 | 0,21 | 0,22 | 0,22 | 0,21 | 0,22 | 0,22 | 0,23 |
| **$Li_2O$** | | 2,85 | 2,12 | 2,66 | 2,58 | 2,58 | 2,72 | 2,70 | 3,70 |
| **MgO** | | 1,57 | 2,44 | 1,75 | 1,60 | 1,63 | 1,65 | 1,74 | 0,37 |
| **$Na_2O$** | | 0,55 | 0,54 | 0,50 | 0,59 | 0,53 | 0,56 | 0,49 | 0,59 |
| **$P_2O_5$** | | 0,06 | - | 0,06 | 0,06 | - | - | 0,07 | 0,07 |
| **$SiO_2$** | | 65,2 | 65,1 | 65,4 | 65,6 | 65,1 | 66,1 | 65,2 | 65,1 |
| **$SnO_2$** | | 0,23 | 0,23 | 0,25 | 0,25 | 0,24 | 0,25 | 0,25 | 0,24 |
| **$TiO_2$** | | 3,13 | 3,15 | 3,25 | 3,40 | 3,29 | 3,36 | 5,07 | 3,10 |
| **ZnO** | | 1,40 | 1,42 | 1,69 | 1,57 | 1,38 | 1,41 | 1,62 | 1,50 |
| **$ZrO_2$** | | 1,39 | 1,39 | 1,55 | 1,51 | 1,44 | 1,51 | - | 1,36 |
| **$Fe_2O_3$** | | 0,092 | 0,091 | 0,087 | 0,087 | 0,092 | 0,095 | 0,093 | 0,080 |
| **CoO** | | - | - | - | - | - | - | - | 0,003 |
| **$MnO_2$** | | - | - | 0,020 | 0,020 | - | - | - | - |
| **$V_2O_5$** | | 0,027 | 0,026 | 0,027 | 0,027 | 0,024 | 0,025 | 0,019 | 0,024 |
| | | | | | | | | | |
| **Verhältnis $MgO/Li_2O$** | | 0,55 | 1,15 | 0,66 | 0,62 | 0,63 | 0,61 | 0,64 | 0,10 |
| **Tg** | °C | 682 | 700 | 679 | 685 | 654 | 672 | 671 | 670 |
| **$V_A$** | °C | 1304 | 1306 | 1303 | 1315 | 1269 | 1298 | 1296 | 1305 |
| **Dichte** | g/cm³ | 2,489 | 2,495 | 2,496 | 2,492 | 2,493 | 2,493 | 2,485 | 2,479 |
| **Entglasungstemp** | °C | 1285 | 1320 | 1245 | 1270 | 1215 | 1245 | 1265 | 1235 |

Tabelle 3 Keramisierungsbedingungen und Eigenschaften erfindungsgemäßer transparenter Glaskeramiken, Beispiele 1 bis 3 und Vergleichsglaskeramik, Beispiel 4

| Beispiel Nr | | 1 | 2 | 3 | 4 |
|---|---|---|---|---|---|
| Glas Nr. | | **1** | **2** | **3** | **4** |
| Keramisierungsprogramm | | 1 | 2 | 1 | 1 |
| Keimbildung TKB tKB | °C min | 770 30 | 790 15 | 765 30 | 765 30 |
| $T_{max}$ | °C | 905 | 903 | 898 | 898 |
| tmax | min | 15 | 15 | 15 | 15 |
| Eigenschaften keramisiert: | | | | | |
| Thermische Ausdehnung | | | | | |
| $\alpha$20/500 | $10^{-6}$/K | 1,0 | 1,2 | 1,1 | -0,1 |
| $\alpha$20/700 | $10^{-6}$/K | 1,0 | 1,3 | 1,1 | -0,03 |
| Transmission Normlicht C, 2° | | | | | |
| Dicke | mm | 4 | 4 | 4 | 4 |
| 400 nm | % | 68,7 | 20,0 | 58,0 | 68,0 |
| 450 nm | % | 81,9 | 51,9 | 77,2 | 81,9 |
| 500 nm | % | 85,5 | 61,1 | 82,0 | 85,5 |
| 600 nm | % | 89,1 | 74,6 | 86,3 | 89,3 |
| 700 nm | % | 90,3 | 82,9 | 88,8 | 90,5 |
| 1600 nm | % | 88,5 | 73,3 | 88,9 | 89,0 |
| Lichttransmission Y | % | 87,6 | 68,8 | 84,3 | 87,8 |
| Yellowness Index | | 8,0 | 31,4 | 10,4 | 8,2 |
| HQz-Phasengehalt | % | 70 | 63 | 72 | 71 |
| mittlere Kristallitgröße | nm | 46 | 51 | 52 | 34 |

Tabelle 4: Keramisierungsbedingungen und Eigenschaften erfindungsgemäßer transparent eingefärbter Glaskeramiken, Beispiele 5 bis 12 und Vergleichsglaskeramik, Beispiel 13

| Beispiel Nr | | 5 | 6 | 7 | 8 | 9 | 10 | 11 | 12 | 13 |
|---|---|---|---|---|---|---|---|---|---|---|
| Glas Nr. | | **5** | **6** | **7** | **7** | **8** | **9** | **10** | **11** | **12** |
| Keramisierungsprogramm | | 1 | 1 | 3 | 4 | 4 | 4 | 4 | 4 | 4 |
| Keimbildung TKB tKB | °C min | 775 30 | 775 30 | | | | | | | |
| T max | °C | 899 | 911 | 920 | 900 | 900 | 850 | 870 | 900 | 900 |
| t max | min | 15 | 15 | 6 | 15 | 15 | 15 | 15 | 15 | 15 |
| Eigenschaften keramisiert: | | | | | | | | | | |
| Thermische Ausdechnung | | | | | | | | | | |
| $\alpha$20/500 | $10^{-6}$/K | 1,3 | 2,0 | 1,4 | 1,4 | 1,4 | 1,7 | 1,5 | 1,4 | - |

(fortgesetzt)

| Keimbildung α20/700 | 10⁻⁶/K | 1,3 | 2,0 | 1,4 | 1,4 | 1,5 | 2,0 | 1,6 | 1,5 | 0,18 |
|---|---|---|---|---|---|---|---|---|---|---|
| Transmission Normlicht C, 2° | | | | | | | | | | |
| Dicke | mm | 4 | 4 | 3 | 3 | 3 | 3 | 3 | 3 | 4 |
| 400 nm | % | 0,3 | 0,3 | 0,6 | 0,5 | 0,6 | 0,01 | 0,2 | 0,05 | 0,3 |
| 450 nm | % | 0,4 | 0,4 | 0,9 | 0,7 | 0,75 | 0,05 | 0,6 | 0,3 | 0,3 |
| 500 nm | % | 0,4 | 0,4 | 0,9 | 0,7 | 0,7 | 0,1 | 0,6 | 0,4 | 0,3 |
| 550 nm | % | 0,8 | 0,9 | 1,7 | 1,3 | 1,3 | 0,4 | 1,0 | 0,9 | 0,7 |
| 630 nm | % | 5,1 | 5,2 | 7,4 | 6,4 | 6,4 | 2,0 | 4,0 | 3,8 | 4,5 |
| 700 nm | % | 17,9 | 18,0 | 21,4 | 19,6 | 19,7 | 6,8 | 12,0 | 10,8 | 16,7 |
| 1600 nm | % | 73,5 | 72,4 | 77,8 | 77,6 | 81,3 | 60,4 | 71,8 | 75,5 | 76,7 |
| Lichttransmission Y | % | 1,6 | 1,6 | 2,6 | 2,1 | 2,2 | 0,6 | 1,5 | 1,4 | 1,3 |
| | | | | | | | | | | |
| HQz-Phasengehalt | % | 63 | 57 | 62 | 62 | 55 | 48 | 58 | 69 | 62 |
| mittlere Kristallitgröße | nm | 50 | 63 | 69 | 65 | 68 | 120 | 95 | 61 | 44 |

Tabelle 5 Eigenschaften undekorierter und dekorierter Glaskeramikplatten (Dicke 3 mm) und Vergleichsbeispiele 18 bis 21

| Beispiel Nr. | | 14 | 15 | 16 | 17 | 18 | 19 | 20 | 21 | 22 | 23 | 24 | 25 |
|---|---|---|---|---|---|---|---|---|---|---|---|---|---|
| Glas Nr. | | 7 | 7 | 7 | 7 | **13** | **13** | **13** | **13** | **3** | **3** | **3** | **3** |
| Dekor | | Glassfluss / 20 % $TiO_2$ Weißpigment | | | | Glassfluss / 20 % $TiO_2$ Weißpigment | | | | Glassfluss / 20 % $TiO_2$ Weißpigment | | | |
| Dekor-Schichtdicke | $\mu$m | undek. | 2,3 | 5,0 | 7,7 | undek. | 2,5 | 5,4 | 8,0 | undek. | 3,2 | 5,5 | 7,8 |
| | | | | | | | | | | | | | |
| Keramisierung und Dekoreinbrand, Programm | | 3 | 3 | 3 | 920 | 3 | 3 | 3 | 3 | 1 | 1 | 1 | 1 |
| Keimbildung $T_{KB}$ $t_{KB}$ | | | | | | | | | | 765 30 | 765 30 | 765 30 | 765 30 |
| T max | | 920 | 920 | 920 | 920 | 920 | 920 | 920 | 920 | 900 | 900 | 900 | 900 |
| t max | | 6 | 6 | 6 | 6 | 6 | 6 | 6 | 6 | 15 | 15 | 15 | 15 |
| Beurteilung Rissnetzwerk | | - | 1 | 1-2 | 3 | - | 1-2 | 3 | 5 | - | - | - | - |
| Biegezugfestigkeit | (MPa) | 125 | 62 | 41 | 35 | 149 | 35 | 30 | <30 | 169 | 75 | 53 | 49 |
| Remission Normlicht C/2° (mit Dekor) | | | | | | | | | | | | | |
| Lab L* | | 25,0 | 61,6 | 73,9 | 79,6 | 24,4 | 61,8 | 74,3 | 80,4 | - | - | - | - |
| CIE Y | | 4,4 | 30,0 | 46,6 | 56,1 | 4,2 | 30,2 | 47,1 | 57,5 | - | - | - | - |
| Lichttransmission Durchlicht Normlicht C/2° (mit Dekor) | | | | | | | | | | | | | |
| Lab L* | | 16,6 | 6,0 | 4,4 | 3,5 | 21,5 | 8,7 | 6,1 | 5,2 | 94,2 | 58,7 | 37,7 | 21,7 |
| CIE Y | | 2,2 | 0,7 | 0,5 | 0,4 | 3,4 | 1,0 | 0,7 | 0,6 | 85,8 | 26,7 | 9,9 | 3,4 |

**Patentansprüche**

1. Transparente eingefärbte Lithiumaluminiumsilikat (LAS)-Glaskeramik mit angepasster thermischer Ausdehnung bestehend aus einer Glaskeramik mit Hochquarz-Mischkristallen als vorherrschender Kristallphase, **dadurch gekennzeichnet,**
   **dass** die Glaskeramik als Hauptbestandteile enthält (in Gew. % auf Oxidbasis):

   | | |
   |---|---|
   | $Li_2O$ | 2,0 - < 3,0 |
   | MgO | 1,4-3 |
   | $Al_2O_3$ | 19-23 |
   | $SiO_2$ | 60-69 |
   | $TiO_2$ | 0,5-6,0 |
   | $ZrO_2$ | 0 - < 2,0 |
   | $SnO_2$ | 0-0,6 |

   und dass sie neben dem Farboxid $V_2O_5$ in Gehalten von 0,01 bis 0,06 Gew. % weitere färbende Komponenten aus der Gruppe Chrom-, Mangan-, Kobalt-, Nickel-, Kupfer-, Selen-, Selten Erd-, Molybdän- oder Sulfidverbindungen enthält
   und **dass** sie eine thermische Ausdehnung zwischen Raumtemperatur und 700°C von 1,0 bis 2,5 • $10^{-6}$/K, bevorzugt 1,3 bis 1,8 • $10^{-6}$/K aufweist.

2. Transparente eingefärbte Lithiumaluminiumsilikat-Glaskeramik nach Anspruch 1, **dadurch gekennzeichnet, dass** sie Molybdänverbindungen enthält.

3. Transparente eingefärbte Lithiumaluminiumsilikat-Glaskeramik nach Anspruch 1 oder 2, **gekennzeichnet durch** eine Zusammensetzung die als Hauptbestandteile die Komponenten enthält (in Gew. % auf Oxidbasis):

   | | |
   |---|---|
   | $Li_2O$ | 2,0 - < 3,0 |
   | $\Sigma$ $Na_2O+K_2O$ | 0-2 |
   | MgO | 1,4-3 |
   | $\Sigma$ CaO+SrO+BaO | 0-4 |
   | ZnO | 0-3 |
   | $Al_2O_3$ | 19-23 |
   | $SiO_2$ | 60-69 |
   | $TiO_2$ | 0,5-6,0 |
   | $ZrO_2$ | 0 - < 2,0 |
   | $SnO_2$ | 0-0,6 |
   | $\Sigma$ $TiO_2+ZrO_2+SnO_2$ | 3-6 |
   | $P_2O_5$ | 0-3 |

   mit der Bedingung:
   MgO / $Li_2O$ > 0,4
   sowie gegebenenfalls ein Läutermittel, ausgewählt aus der Gruppe $Sb_2O_3$, $As_2O_3$ in Gehalten von 0,1 bis 2 Gew. %.

4. Transparente eingefärbte Lithiumaluminiumsilikat-Glaskeramik nach einem der Ansprüche 1 bis 3, **dadurch gekennzeichnet,**
   **dass** die Glaskeramik bis auf unvermeidliche Spuren keines der chemischen Läutermittel Arsenoxid und/oder Antimonoxid enthält.

5. Transparente eingefärbte Lithiumaluminiumsilikat-Glaskeramik nach den Ansprüchen 1 bis 3, **gekennzeichnet durch** eine Lichttransmission kleiner als 5 % und eine Zusammensetzung, die (in Gew. % auf Oxidbasis) im Wesentlichen besteht aus

   | | |
   |---|---|
   | $Li_2O$ | 2,0 - <3,0 |

(fortgesetzt)

| | |
|---|---|
| $\Sigma$ Na$_2$O+K$_2$O | 0,1 - 1,5 |
| MgO | 1,4-2,6 |
| $\Sigma$ CaO+SrO+BaO | 0-4 |
| ZnO | 0-3 |
| B$_2$O$_3$ | 0-2 |
| Al$_2$O$_3$ | 19-23 |
| SiO$_2$ | 60-69 |
| TiO$_2$ | 2-6 |
| ZrO$_2$ | 0 - < 2 |
| P$_2$O$_5$ | 0-3 |
| SnO$_2$ | 0 -0,6 |
| $\Sigma$ TiO$_2$+ZrO$_2$+SnO$_2$ | 3-6 |

mit der Bedingung:

MgO / Li$_2$O > 0,5,
sowie gegebenenfalls ein Läutermittel, ausgewählt aus der Gruppe Sb$_2$O$_3$, As$_2$O$_3$ in Gehalten von 0,1 bis 2 Gew. %.

6. Transparente eingefärbte Lithiumaluminiumsilikat-Glaskeramik nach einem der vorhergehenden Ansprüche, **gekennzeichnet durch** gute Schmelzbarkeit und Entglasungsstabilität des kristallisierbaren Ausgangsglases mit einer Verarbeitungstemperatur V$_A$ kleiner als 1320°C, eine obere Entglasungsgrenze mindestens 15°C unter V$_A$, eine Lichttransmission von kleiner 5 % und eine Zusammensetzung der Glaskeramik (in Gew. % auf Oxidbasis) von:

| | |
|---|---|
| Li$_2$O | 2,0 - <3,0 |
| Na$_2$O | 0,1 -1 |
| K$_2$O | 0,1 - 1 |
| $\Sigma$ Na$_2$O+K$_2$O | 0,2 - 1,5 |
| MgO | 1,5-2,6 |
| CaO | 0,1 - 1 |
| SrO | 0-1 |
| BaO | 0-3 |
| $\Sigma$ CaO+SrO+BaO | 0,2-4 |
| ZnO | 0-2,5 |
| B$_2$O$_3$ | 0-1 |
| Al$_2$O$_3$ | 19-23 |
| SiO$_2$ | 62-67 |
| TiO$_2$ | 2,5-6 |
| ZrO$_2$ | 0 -1,6 |
| P$_2$O$_5$ | 0-1,5 |
| SnO$_2$ | 0,1 -0,4 |
| $\Sigma$ TiO$_2$+ZrO$_2$+SnO$_2$ | 4,2 - 6 |
| V$_2$O$_5$ | 0,01 - 0,05 |
| Fe$_2$O$_3$ | 0,05 - 0,3, |

mit den Bedingungen:

Fe$_2$O$_3$ / V$_2$O$_5$ >2,
MgO / Li$_2$O > 0,5,
ohne die Läutermittel Arsen- und Antimonoxid.

7. Transparente eingefärbte Lithiumaluminiumsilikat-Glaskeramik nach einem der Ansprüche 1 bis 6,

**dadurch gekennzeichnet,**
**dass** sie in Form einer Platte vorliegt.

8. Transparente eingefärbte Lithiumaluminiumsilikat-Glaskeramik nach Anspruch 7,
   **dadurch gekennzeichnet,**
   **dass** die Platte auf mindestens einer Seite ganz oder teilflächig mit einer anorganischen Dekorierung beschichtet ist.

9. Transparente eingefärbte Lithiumaluminiumsilikat-Glaskeramik nach Anspruch 8,
   **dadurch gekennzeichnet,**
   **dass** die dekorierte Platte bei einer Schichtdicke des Dekors von mindestens 3 $\mu$m eine Biegezugfestigkeit von größer als 50 MPa besitzt.

10. Transparente eingefärbte Lithiumaluminiumsilikat-Glaskeramik nach einem der Ansprüche 8 bis 9, **dadurch gekennzeichnet,**
    **dass** die Schichtdicke der Dekorfarbe größer ist als 5 $\mu$m, bevorzugt größer als 6 $\mu$m, wobei die Biegezugfestigkeit der dekorierten Glaskeramikplatte mindestens 35 MPa beträgt.

11. Verwendung einer transparenten eingefärbten Lithiumaluminosilikat-Glaskeramik nach den vorhergehenden Ansprüchen 1 bis 10 als Kaminsichtscheibe, Brandschutzverglasung, Displayscheibe, Sicherheitsverglasung oder als Kochfläche.

12. Kochfläche aus transparent eingefärbter Lithiumaluminiumsilikat-Glaskeramik nach einem der vorhergehenden Ansprüche 1 bis 10,
    **dadurch gekennzeichnet,**
    **dass** die Kochfläche eine Lichttransmission im Sichtbaren von 0,5 bis 2,5 % und eine Transmission größer als 0,1 % im Bereich des sichtbaren Lichtes für den gesamten Wellenlängenbereich ab 450 nm besitzt.

13. Kochfläche aus transparent eingefärbter Lithiumaluminiumsilikat Glaskeramik nach Anspruch 12, **gekennzeichnet durch** Transmissionswerte von
    > 0,15 % bei 450 nm
    > 0,15 % bei 500 nm
    > 0,25 % bei 550 nm
    2 - 12 % bei 630 nm
    und eine Lichttransmission im Sichtbaren von 0,7 - 2,5 %.

14. Kochfläche nach Anspruch 12 bis 13,
    **dadurch gekennzeichnet,**
    **dass** anstelle oder in Ergänzung zu den üblichen roten Anzeigen eine oder mehrere andersfarbige Anzeigen, wie blaue, grüne, gelbe, orange oder weiße eingesetzt sind.

15. Kochfläche nach Anspruch 12 bis 14,
    **gekennzeichnet durch** eine Beheizung mittels Induktion oder Gas und eine Temperaturunterschiedsfestigkeit von weniger als 600 °C.

Europäisches
Patentamt

European
Patent Office

Office européen
des brevets

# EUROPÄISCHER RECHERCHENBERICHT

Nummer der Anmeldung

EP 21 16 5450

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 2 405 906 A1 (CORNING GLASS WORKS [US]) 11. Mai 1979 (1979-05-11) | 1-3,5-15 | INV. C03C10/00 |
| Y | * Zusammenfassung * * Seite 3; Beispiel 1 * * Ansprüche 1-7 * * Seite 4, Zeile 18 - Zeile 20 * ----- | 4 | |
| X | US 4 211 820 A (CANTALOUPE FRANCIS A [US] ET AL) 8. Juli 1980 (1980-07-08) * Zusammenfassung * * Spalte 3, Zeilen 5-10,29-30 * * Beispiele 11-14; Tabelle I * * Anspruch 1 * ----- | 1 | |
| Y | EP 1 114 803 A1 (NIPPON ELECTRIC GLASS CO [JP]) 11. Juli 2001 (2001-07-11) * Zusammenfassung * * Absatz [0016] * ----- | 4 | |
| Y | WO 02/16279 A1 (SCHOTT GLAS [DE]; ZEISS STIFTUNG [DE]; SIEBERS FRIEDRICH [DE]; NASS PE) 28. Februar 2002 (2002-02-28) * Zusammenfassung * * Anspruch 4 * * Seiten 1-3 * ----- | 4 | |

RECHERCHIERTE SACHGEBIETE (IPC)

C03C

Der vorliegende Recherchenbericht wurde für alle Patentansprüche erstellt

| Recherchenort | Abschlußdatum der Recherche | Prüfer |
|---|---|---|
| Den Haag | 13. Juli 2021 | Mertins, Frédéric |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

EP 3 878 825 A1

**ANHANG ZUM EUROPÄISCHEN RECHERCHENBERICHT
ÜBER DIE EUROPÄISCHE PATENTANMELDUNG NR.**

EP 21 16 5450

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-07-2021

| Im Recherchenbericht angeführtes Patentdokument | Datum der Veröffentlichung | Mitglied(er) der Patentfamilie | Datum der Veröffentlichung |
|---|---|---|---|
| FR 2405906 A1 | 11-05-1979 | DE 2844030 A1<br>FR 2405906 A1 | 19-04-1979<br>11-05-1979 |
| US 4211820 A | 08-07-1980 | DE 3003016 A1<br>JP S6054896 B2<br>JP S55104944 A<br>US 4211820 A | 07-08-1980<br>02-12-1985<br>11-08-1980<br>08-07-1980 |
| EP 1114803 A1 | 11-07-2001 | CA 2338354 A1<br>DE 69927511 T2<br>DK 1114803 T3<br>EP 1114803 A1<br>US 6593258 B1<br>WO 0073225 A1 | 07-12-2000<br>23-03-2006<br>06-02-2006<br>11-07-2001<br>15-07-2003<br>07-12-2000 |
| WO 0216279 A1 | 28-02-2002 | AT 431812 T<br>CA 2422405 A1<br>CN 1454189 A<br>EP 1313675 A1<br>EP 2088130 A1<br>JP 4939723 B2<br>JP 2004523446 A<br>US 2003218001 A1<br>WO 0216279 A1 | 15-06-2009<br>27-03-2003<br>05-11-2003<br>28-05-2003<br>12-08-2009<br>30-05-2012<br>05-08-2004<br>27-11-2003<br>28-02-2002 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1837312 A1
- JP 11100229 A
- JP 11100230 A
- US 20070004578 A1
- US 20080026927 A1
- DE 19939787 C2

- EP 1170264 B1
- DE 19721737 C1
- US 6660980 B2
- US 4438210 A
- DE 102008050263 A1

**In der Beschreibung aufgeführte Nicht-Patentliteratur**

- Low Thermal Expansion Glass Ceramics. Springer-Verlag, 2005